# EUROPEAN PATENT SPECIFICATION

(11) **EP 1 867 892 B1**
(45) Date of publication and mention of the grant of the patent: **12.11.2008**
(21) Application number: 07018511.1
(22) Date of filing: 25.09.2006
(51) Int. Cl.: F16F 9/44

(54) **Hydraulic shock absorber**
Hydraulischer Stoßdämpfer
Absorbeur de choc hydraulique

(30) Priority: 28.10.2005 JP 2005315304; 22.03.2006 JP 2006079592; 26.12.2005 JP 2005373285; 28.10.2005 JP 2005315309; 27.06.2006 JP 2006177358
(43) Date of publication of application: 19.12.2007
(62) Divisional of application: 06020043.3
(73) Proprietor: SHOWA CORPORATION, Gyoda-shi, Saitama (JP)
(72) Inventor: Murakami, Yosuke c/o Showa Corporation, Fukuroi-shi Shizuoka (JP)
(74) Representative: Grünecker, Kinkeldey, Stockmair & Schwanhäusser Anwaltssozietät

(56) References cited:
- JP-A- 2002 161 938
- JP-A- 2003 090 379
- JP-A- 2003 307 245
- JP-A- 2004 251 430
- JP-U- 2 150 439
- JP-U- 60 139 591

## Description

The present invention relates to a vehicular hydraulic shock absorber according to the preamble of claim 1 and according to the preamble of claim 6.

As described in Japanese Utility Model Application Laid-open No.2-150439 (patent document 1), there is a vehicular hydraulic shock absorber in which an inner tube on the side of an axle is slidably inserted into an outer tube on the side of a vehicle body. The inner tube is provided at its inner periphery with a partition wall member. A working oil chamber is defined in a lower portion of the partition wall member. An oil reservoir chamber is defined in an upper portion of the partition wall member. A piston rod mounted on the side of the outer tube is inserted into the working oil chamber such as to pass through the partition wall member. The piston rod is provided at its tip end with a piston which slides in the working oil chamber. A suspension spring is interposed between an upper spring receiver on the side of the piston rod and a lower spring receiver on the side of a bottom of the inner tube in the working oil chamber of the inner tube.

According to the hydraulic shock absorber of patent document 1, a plunger is slidably fitted into a bottom of the inner tube, the lower spring receiver for a suspension spring is placed on an upper portion of the plunger, the plunger is provided at its lower portion with a pressurizing chamber of working oil, the pressurizing chamber is pressurized by a pump piston which is operated from outside and operated, thereby adjusting a spring load of the suspension spring from outside.

Japanese Utility Model Application Laid-open No.60-139591 (patent document 2) discloses a hydraulic shock absorber in which a spring load of a suspension spring is supported by a plunger, a slant member which is opposed to the plunger is provided, and an adjusting bolt presses a ball interposed between the plunger and a slant of the slant member so that the spring load of the suspension spring can be adjusted from outside.

According to the hydraulic shock absorber of patent document 1, it is necessary to slidably assemble the plunger and the pump piston on the side of the bottom of the inner tube, it becomes difficult to machine parts and to assemble and this increases the cost.

Further, the load of the suspension spring is supported by the working oil in the pressurizing chamber. It is difficult to seal the high pressure of the working oil in the pressurizing chamber, and the cost is increased.

According to the hydraulic shock absorber of patent document 2, a ball pushed by the adjusting bolt is pressed from the lateral direction with respect to the slant of the slant member, and the ball is pushed up above the slant. There is an adverse possibility that the slant is deformed by the point contact with the ball and the durability of the slant member is deteriorated. A diameter of the ball is limited by the installation space, and a large adjusting width of the spring load can not be secured.

In the hydraulic shock absorber, it is preferable that the spring load of the suspension spring can also be adjusted without detaching the axle from the hydraulic shock absorber.

In a hydraulic shock absorber which vertically moves a lower spring receiver of a suspension spring provided on the side of a bottom of an inner tube to adjust a spring load, it is an object of the present invention to simplify a structure for vertically moving the lower spring receiver from outside.

In a hydraulic shock absorber which vertically moves the lower spring receiver of the suspension spring provided on the side of the bottom of the inner tube to adjust the spring load, it is another object of the invention simplify a structure for vertically moving the lower spring receiver from outside without detaching the hydraulic shock absorber from the axle.

In a hydraulic shock absorber in which the lower spring receiver provided on the side of a bottom of the inner tube is vertically moved to adjust a spring load of a suspension spring, it is an object of the invention to simplify a structure for moving the lower spring receiver from outside without detaching the axle, and to secure sufficient spring load adjusting width and durability.

In ordes to solve the above defined objects, the present invention provides the hydraulic shock absorber according to claims 1 and 6. example desinbed in this specifiation relates to a hydraulic shock absorber in which an axle-side inner tube is slidably inserted into a vehicle body-side outer tube, the inner tube is provided at its inner periphery with a partition wall member, a working oil chamber is defined in a lower portion of the partition wall member, and an oil reservoir chamber is defined in an upper portion of the partition wall member, a piston support member mounted on the side of the outer tube is inserted into the working oil chamber such as to penetrate the partition wall member, the piston support member is provided at its tip end with a piston which slides in the working oil chamber, a suspension spring is interposed between an upper spring receiver on the side of the piston support member and a lower spring receiver on the side of a bottom of the inner tube in the working oil chamber of the inner tube. The lower spring receiver is supported by an adjusting bolt provided on the side of the bottom of the inner tube, the lower spring receiver is vertically moved by threading motion of the adjusting bolt, thereby adjusting a spring load of the suspension spring.

Another ③ relates to a hydraulic shock absorber in which an axle-side inner tube is slidably inserted into a vehicle body-side outer tube, the inner tube is provided at its inner periphery with a partition wall member, a working oil chamber is defined in a lower portion of the partition wall member, and an oil reservoir chamber is defined in an upper portion of the partition wall member, a piston support member mounted on the side of the outer tube is inserted into the working oil chamber such as to penetrate the partition wall member, the piston support member is provided at its tip end with a piston which slides in the working oil chamber, a suspension spring is interposed between an upper spring receiver on the side of the piston support member and a lower spring receiver on the side of a bottom of the inner tube in the working oil chamber of the inner tube. The lower spring receiver is supported by the adjusting bolt provided on the bottom of the inner tube such that the adjusting bolt faces outside at a position deviated from an axle mounting hole of the bottom of the inner tube, the lower spring receiver is vertically moved by threading motion of the adjusting bolt, thereby adjusting the spring load of the suspension spring.

Still another ③ relates to a hydraulic shock absorber in which an axle-side inner tube is slidably inserted into a vehicle body-side outer tube, the inner tube is provided at its inner periphery with a partition wall member, a working oil chamber is defined in a lower portion of the partition wall member, and an oil reservoir chamber is defined in an upper portion of the partition wall member, a piston support member mounted on the side of the outer tube is inserted into the working oil chamber such as to penetrate the partition wall member, the piston support member is provided at its tip end with a piston which slides in the working oil chamber, a suspension spring is interposed between an upper spring receiver on the side of the piston support member and a lower spring receiver on the side of a bottom of the inner tube in the working oil chamber of the inner tube. An adjuster facing outside is provided on the bottom of the inner tube at a position deviated from the axle mounting hole of the bottom of the inner tube, the lower spring receiver is supported by the adjusting bolt provided on the bottom of the inner tube, the adjusting bolt is threadedly moved by operation added to an adjuster from outside, the lower spring receiver is vertically moved by threading motion of the adjusting bolt, thereby adjusting the spring load of the suspension spring.

The present invention relates to a hydraulic shock absorber in which an axle-side inner tube is slidably inserted into a vehicle body-side outer tube, the inner tube is provided at its inner periphery with a partition wall member, a working oil chamber is defined in a lower portion of the partition wall member, and an oil reservoir chamber is defined in an upper portion of the partition wall member, a piston support member mounted on the side of the outer tube is inserted into the working oil chamber such as to penetrate the partition wall member, the piston support member is provided at its tip end with a piston which slides in the working oil chamber, a suspension spring is interposed between an upper spring receiver on the side of the piston support member and a lower spring receiver on the side of a bottom of the inner tube in the working oil chamber of the inner tube. The bottom of the inner tube is provided with an adjusting bolt facing outside at a position deviated from an axle mounting hole of the bottom of the inner tube, a plunger which supports a lower surface of the lower spring receiver is provided, a plurality of balls are continuously provided in a bent tube extended between the adjusting bolt and the plunger, an end surface of the adjusting bolt is abutted against one end ball of the continuous ball group, an end surface of the plunger is abutted against the other end ball of the ball group, the lower spring receiver is vertically moved by threading motion of the adjusting bolt, thereby adjusting a spring load of the suspension spring.

The present invention also relates to a hydraulic shock absorber in which an axle-side inner tube is slidably inserted into a vehicle body-side outer tube, the inner tube is provided at its inner periphery with a partition wall member, a working oil chamber is defined in a lower portion of the partition wall member, and an oil reservoir chamber is defined in an upper portion of the partition wall member, a piston support member mounted on the side of the outer tube is inserted into the working oil chamber such as to penetrate the partition wall member, the piston support member is provided at its tip end with a piston which slides in the working oil chamber, a suspension spring is interposed between an upper spring receiver on the side of the piston support member and a lower spring receiver on the side of a bottom of the inner tube in the working oil chamber of the inner tube. An adjusting bolt facing outside is provided on a bottom of the inner tube at a location deviated from an axle mounting hole of the bottom of the inner tube, a slider provided on the bottom of the inner tube can straightly move in a direction intersecting with a center axis of the inner tube by rotation force of the adjusting bolt, a lower slant of the lower spring receiver is placed on an upper slant of the slider, the lower spring receiver is vertically moved by rotation of the adjusting bolt, thereby adjusting a spring load of a suspension spring.

The present invention will be more fully understood from the detailed description given below and from the accompanying drawings which should not be taken to be a limitation on the invention, but are for explanation and understanding only. The drawings:
FIG. 1 is a sectional view showing the entire hydraulic shock absorber according to a first example which does not form past of the invention but which is useful for a better comprehension of the invention;
FIG. 2 is a sectional view of a lower portion in FIG. 1;
FIG. 3 is a sectional view of an intermediate portion in FIG. 1;
FIG. 4 is a sectional view of an upper portion in FIG. 1;
FIG. 5 is a sectional view showing a spring load adjusting apparatus;
FIG. 6 is a front view showing an adjusting bolt;
FIG. 7 show an adjusting nut, wherein (A) is a sectional view and (B) is a plan view;
FIG. 8 is a sectional view showing a collar;
FIG. 9 is a plan view showing a rotation preventing washer;
FIG. 10 is a sectional view showing a lower spring receiver;
FIG. 11 is a sectional view showing a modification of the spring load adjusting apparatus;
FIG. 12 is a sectional view showing a spring load adjusting apparatus of a second example which does not form past of the invention but which is useful for a better comprehension of the invention;
FIG. 13 is a front view showing an adjusting bolt;
FIG. 14 show an adjusting nut, wherein (A) is a side sectional view, (B) is a plan view and (C) is a diagram showing an end surface;
FIG. 15 show a slider, wherein (A) is a side sectional view, (B) is a plan view, (C) is a front view and (D) is a rear view;
FIG. 16 is a plan view showing a rotation preventing washer;
FIG. 17 is a sectional view showing a lower spring receiver;
FIG. 18 is a sectional view showing a modification of the spring load adjusting apparatus;
FIG. 19 is a sectional view showing a spring load adjusting apparatus of a third example which does not form past of the invention but which is useful for a better comprehension of the invention;
FIG. 20 shows an adjuster, wherein (A) is a front view and (B) is a diagram showing an end surface;
FIG. 21 shows a plug, wherein (A) is a front view and (B) is a diagram showing an end surface;
FIG. 22 is a front view showing an adjusting bolt;
FIG. 23 shows an adjusting nut, wherein (A) is a semi-sectional view and (B) is a diagram showing an end surface;
FIG. 24 is a plan view showing a rotation preventing washer;
FIG. 25 is a sectional view showing a lower spring receiver;
FIG. 26 is a sectional view showing the entire hydraulic shock absorber according to a first embodiment;
FIG. 27 is a sectional view showing a spring load adjusting apparatus;
FIG. 28 is a sectional view showing a damping force adjusting apparatus;
FIG. 29 shows a bent tube forming body, wherein (A) is a sectional view and (B) is a bottom view;
FIG. 30 shows a plug, wherein (A) is a sectional view and (B) is a front view;
FIG. 31 is a front view showing an adjusting bolt;
FIG. 32 is a sectional view showing a lower spring receiver;
FIG. 33 is a sectional view showing the entire hydraulic shock absorber according to a second embodiment;
FIG. 34 is a sectional view showing a spring load adjusting apparatus;
FIG. 35 is an enlarged view of an essential portion of a spring load adjusting apparatus;
FIG. 36 shows a nut, wherein (A) is a front view and (B) is a sectional view;
FIG. 37 shows a slider, wherein (A) is a front view, (B) is a side view and (C) is a sectional view taken along the line C-C in (A);
FIG. 38 shows a lower spring receiver, wherein (A) is a front view, (B) is a sectional view and (C) is a plan view;
FIG. 39 shows a lower end of the lower spring receiver, wherein (A) is a bottom view and (B) is a sectional view taken along the line B-B in (A); and
FIG. 40 shows a slider, wherein (A) is a front view and (B) is a side view.

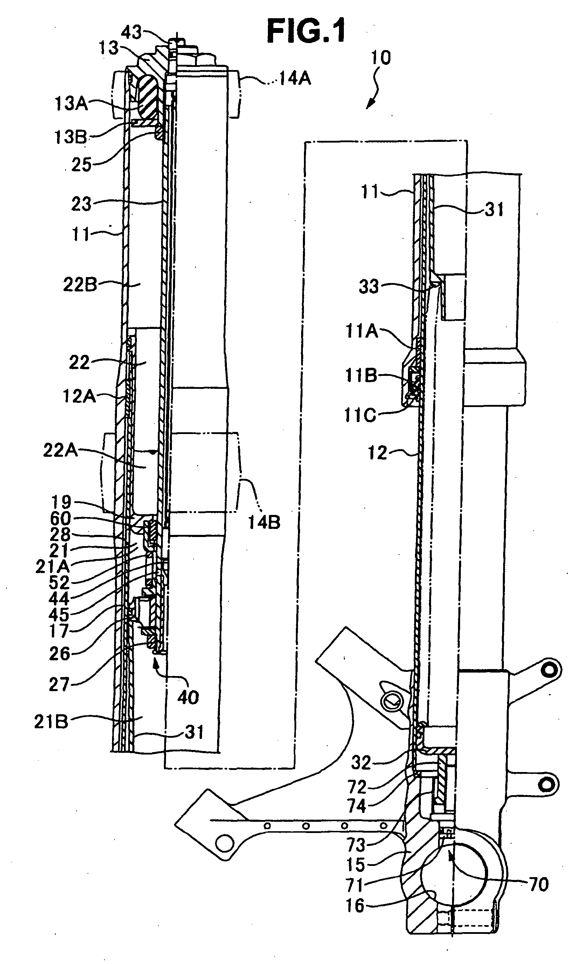

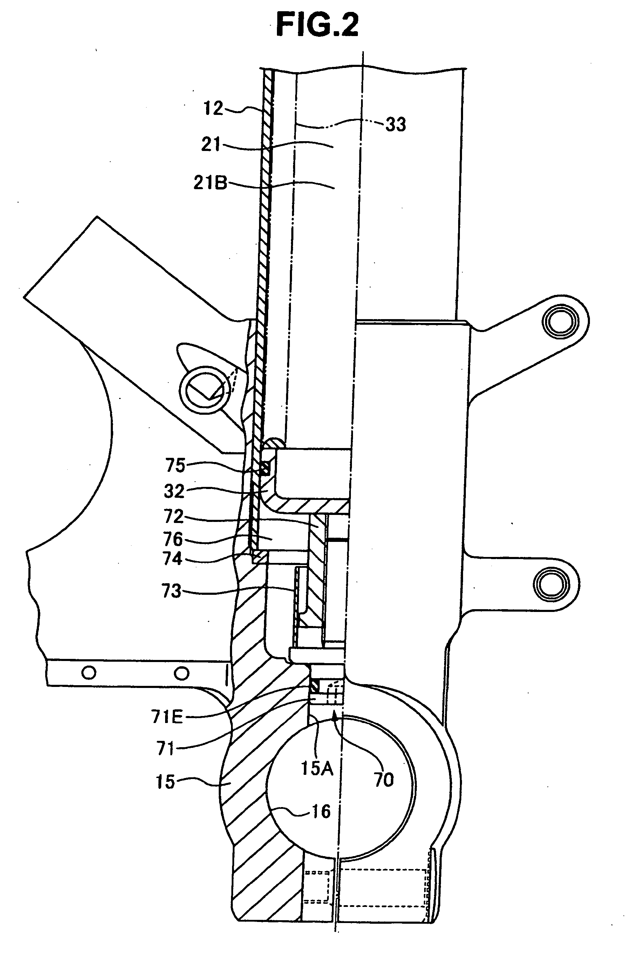

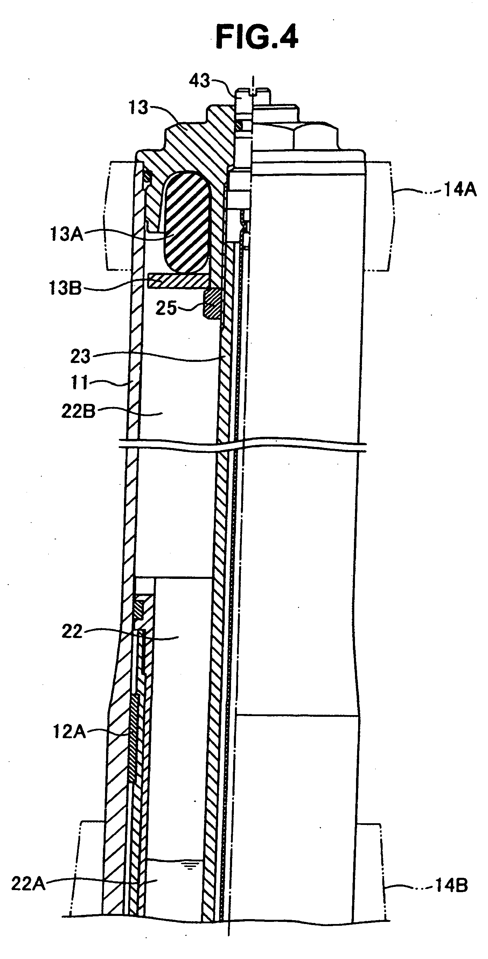

### (First example which does not form past of the invention but which is useful for a better comprehension of the invention) (FIGS. 1 to 11)

A hydraulic shock absorber 10 is an inverted front fork in which an outer tube 11 is disposed on the side of the vehicle body, and an inner tube 12 is disposed on the side of a wheel. As shown in FIGS. 1 to 4, the inner tube 12 is slidably inserted into the outer tube 11 through a guide bush 11A fixed to an inner periphery of an opening of a lower end of the outer tube 11 and a guide bush 12A fixed to an outer periphery of an opening of an upper end of the inner tube 12. Reference symbol 11B represents an oil seal, and a reference symbol 11C represents a dust seal. A cap 13 is liquid-tightly threadedly engaged with the opening of the upper end of the outer tube 11, and the outer tube 11 is provided at its outer periphery with vehicle body-side mounting members 14A and 14B. An axle bracket 15 is liquid-tightly threadedly engaged with the opening of the lower end of the inner tube 12 to form a bottom of the inner tube 12, and the axle bracket 15 is formed with an axle mounting hole 16.

The hydraulic shock absorber 10 defines an annular oil chamber 17 defined by the inner periphery of the outer tube 11, the outer periphery of the inner tube 12 and the two guide bushes 11A and 12A.

The hydraulic shock absorber 10 is provided with a partition wall member 19 liquid tightly through an O-ring around an inner periphery of an upper end side of the inner tube 12, a working oil chamber 21 is defined in the partition wall member 19 at a location lower than the rod guide portion 19A, and an oil reservoir chamber 22 is defined in the partition wall member 19 at a location higher than the rod guide portion 19A. In the oil reservoir chamber 22, its lower region is an oil chamber 22A, and an upper region is an air chamber 22B.

In the hydraulic shock absorber 10, a piston rod 23 mounted on the outer tube 11 is slidably inserted into the rod guide portion 19A of the partition wall member 19. More specifically, the hollow piston rod 23 is threadedly engaged with a lower end of a center portion of the cap 13, and this is fixed by means of a lock nut 25.

In the hydraulic shock absorber 10, a piston 26 which comes into slide contact with the inner periphery of the inner tube 12 is fixed to a tip end of the piston rod 23 inserted into the inner tube 12 from the rod guide portion 19A of the partition wall member 19, and the oil chamber 21 is defined into a piston rod-side oil chamber 21A in which the piston rod 23 is accommodated and a piston side oil chamber 21B in which the piston rod 23 is not accommodated. The piston 26 is fixed by a nut 27.

In the hydraulic shock absorber 10, the annular oil chamber 17 is always in communication with the piston rod-side oil chamber 21A through an oil hole 28 formed in the inner tube 12.

In the hydraulic shock absorber 10, an upper spring receiver 31 pushingly contacts a lower end surface facing the piston side oil chamber 21B of the piston 26, a lower spring receiver 32 sits on a bottom of the inner tube 12 formed by the axle bracket 15, and a suspension spring 33 is interposed between the lower spring receiver 32 and a spring receiver 31C provided on a step with respect to a lowermost end diameter-reduced portion 31B which is connected to a tapered portion 31A of the upper spring receiver 31. The hydraulic shock absorber 10 absorbs an impact force received from a road surface when the vehicle runs by the expansion, compression and vibration of the suspension spring 33.

In the hydraulic shock absorber 10, the piston 26 has a damping force generating apparatus 40.

The damping force generating apparatus 40 includes a compression side flow path 41 and an expansion side flow path 42 (not shown). The compression side flow path 41 is opened and closed by a compression side disk valve 41A which is backed up by a valve stopper 41B. The expansion side flow path 42 is opened and closed by an expansion side disk valve 42A which is backed up by a valve stopper 42B. The valve stopper 41B, the valve 41A, the piston 26, the valve 42A and the valve stopper 42B constitute a valve assembly inserted into the piston rod 23, and the valve assembly is sandwiched and fixed between the stopper ring 41C retained to the piston rod 23 and the nut 27 which is threadedly engaged with the piston rod 23.

In the damping force generating apparatus 40, an adjust rod 43 is liquid tightly threadedly engaged with a center portion of the cap 13, a needle valve 44 fixed to the adjust rod 43 is inserted into a hollow portion of the piston rod 23, and an opening degree of a bypass passage 45 provided in the piston rod 23 by vertically moving the needle valve 44. The bypass passage 45 bypasses the piston 26 and brought the piston rod-side oil chamber 21A and the piston side oil chamber 21B into communication with each other.

In a compression side stroke, the damping force generating apparatus 40 generates a compression side damping force by a passage resistance of the bypass passage 45 whose opening degree is adjusted by the needle valve 44 in the low speed region, and generates a compression side damping force by bending deformation of the compression side disk valve 41A in the intermediate/high speed region. In an expansion side stroke, the damping force generating apparatus 40 generates the expansion side damping force by the passage resistance of the bypass passage 45 whose opening degree is adjusted by the needle valve 44 in the low speed region, and generates the expansion side damping force by bending deformation of the expansion side disk valve 42A in the intermediate/high speed region. The expansion, compression and vibration of the suspension spring 33 are controlled by the compression side damping force and the expansion side damping force.

In the hydraulic shock absorber 10, a stopper rubber 13A and a stopper plate 13B on which an upper end of the partition wall member 19 provided on the inner tube 12 strikes in the most compressed stroke are fixed to a lower end surface of the cap 13, and the most compressed stroke is limited by the stopper rubber 13A.

In the hydraulic shock absorber 10, a rebound spring 52 is interposed between a spring sheet 51 fixed to a lower end surface of the partition wall member 19 facing the piston rod-side oil chamber 21A on the side of an upper end of the inner tube 12 and the valve stopper 41B provided on the piston 26 on the side of the upper end surface. When the hydraulic shock absorber 10 is expanded most, the partition wall member 19 pressurized the rebound spring 52 between itself and the valve stopper 41B, thereby limiting the most expanded stroke.

Therefore, in the hydraulic shock absorber 10, a cross-sectional area S1 of the annular oil chamber 17 comprising an annular gap between the outer tube 11 and the inner tube 12 is greater than a cross-sectional area (area surrounded by an outer diameter) S2 of the piston rod 23 (S 1>S2 including S1≥S2).

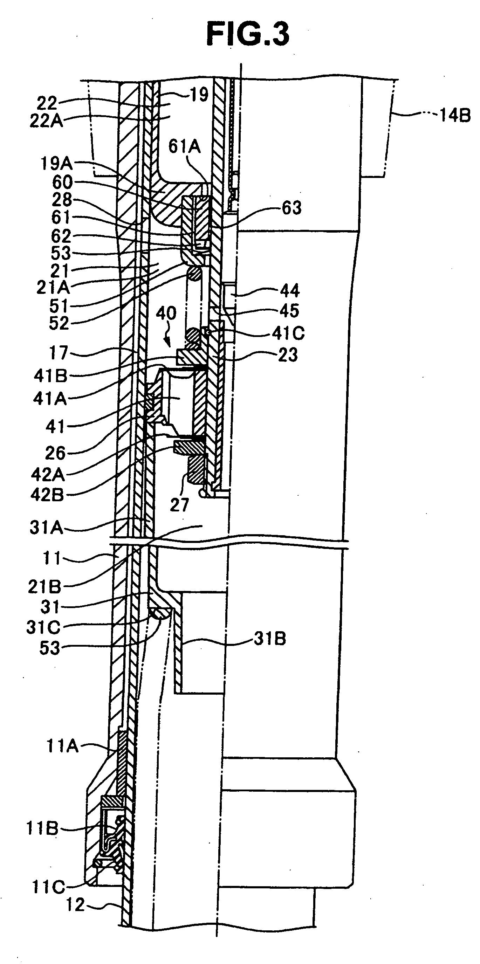

The rod guide portion 19A of the partition wall member 19 is provided with a check valve 60 which permits oil to flow from the oil reservoir chamber 22 into the piston rod-side oil chamber 21A in the compression side stroke, and which prevents oil from flowing from the piston rod-side oil chamber 21A into the oil reservoir chamber 22 in the expansion side stroke. A valve chamber 61 is provided in an inner periphery of the rod guide portion 19A of the partition wall member 19, and the check valve 60 is accommodated between the step portion 61A on the upper end of the valve chamber 61 and the backup spring 53 on the spring sheet 51 provided on the lower end of the valve chamber 61. The check valve 60 is shorter than a distance between the step portion 61A and the spring sheet 51, and a lateral groove 62 is formed in the lower end surface of the check valve 60. The check valve 60 is provided with an inner periphery of the valve chamber 61 provided in the rod guide portion 19A of the partition wall member 19 and it can vertically displace. The outer periphery of the check valve 60 forms a flow path between the outer periphery of the check valve 60 and the inner periphery of the valve chamber 61 provided in the rod guide portion 19A of the partition wall member 19. Oil flows through the flow path from the oil reservoir chamber 22 into the piston rod-side oil chamber 21A. A bush 63 which slidably supports the piston rod 23 is press-fitted into the check valve 60. In the compression side stroke, the check valve 60 moves downward in FIG. 3 together with the piston rod 23 which enters the inner tube 12, and stops at the spring sheet 51, and forms a gap between the check valve 60 and the step portion 61A, and oil in the piston rod-side oil chamber 21A can be discharged into the oil reservoir chamber 22 through a gap with respect to the step portion 61A from the lateral groove 62 through the outer periphery thereof. In the expansion side stroke, the check valve 60 moves upward in FIG. 3 together with the piston rod 23 which retreats from the inner tube 12, stops at the step portion 61A, closes the gap between the check valve 60 and the step portion 61A, and prevents oil in the piston rod-side oil chamber 21A from being discharged into the oil reservoir chamber 22 in the opposite path of the compression side stroke.

No oil seal is mounted on a periphery of the piston rod 23 of the rod guide portion 19A of the partition wall member 19 and thus, a fine flow path (orifice) 64 (not shown) which brings the piston rod-side oil chamber 21A and the oil reservoir chamber 22 into communication with each other is formed by a fine gap (fine gap formed by the check valve 60 between the step portion 61A) formed around the piston rod 23 by the bush 63 which is press-fitted to the inner periphery of the check valve 60. The fine flow path 64 is formed in the rod guide portion 19A of the partition wall member 19, and the piston rod-side oil chamber 21A and the oil reservoir chamber 22 may be in communication with each other.

The hydraulic shock absorber 10 is operated in the following manner.

### (Compression side stroke)

An entering capacity amount of working oil of the piston rod 23 which enters the inner tube 12 in the compression side stroke is sent to the annular oil chamber 17 from the oil chamber 21A of the inner periphery of the inner tube 12 through the oil hole 28 of the inner tube 12. At that time, since the increased capacity amount ΔS1 (supply amount) of the annular oil chamber 17 is greater than the increased capacity amount ΔS2 of the piston rod 23, a shortage amount (ΔS1-ΔS2) of a necessary supply amount of oil into the annular oil chamber 17 is supplied from the oil reservoir chamber 22 through the check valve 60.

In the compression side stroke, as described above, the compression side damping force is generated by the passenger resistance of the bypass passage 45 whose opening degree is adjusted by the needle valve 44 in the low speed region, and the compression side damping force is generated by the bending deformation of the compression side disk valve 41A in the intermediate/high speed region.

### (Expansion side stroke)

In the expansion side stroke, a retreating capacity amount of working oil of the piston rod 23 which is retreated from the inner tube 12 is sent to the oil chamber 21A of the inner periphery of the inner tube 12 through the oil hole 28 of the inner tube 12 from the annular oil chamber 17. At that time, since the reduced capacity amount ΔS1 (discharge amount) of the annular oil chamber 17 is greater than the reduced capacity amount ΔS2 of the piston rod 23, a surplus amount (ΔS1-ΔS2) of oil from the annular oil chamber 17 is discharged into the oil reservoir chamber 22 through the fine flow path 64.

In the expansion side stroke, as described above, the expansion side damping force is generated by the passage resistance of the bypass passage 45 whose opening degree is adjusted by the needle valve 44 in the low speed region, and the expansion side damping force is generated by the bending deformation of the expansion side disk valve 42A in the intermediate/high speed region. The expansion side damping force is also generated by the passage resistance of the fine flow path 64.

A spring load adjusting apparatus 70 which vertically moves the lower spring receiver 32 and adjusts the spring load of the suspension spring 33 will be explained below.

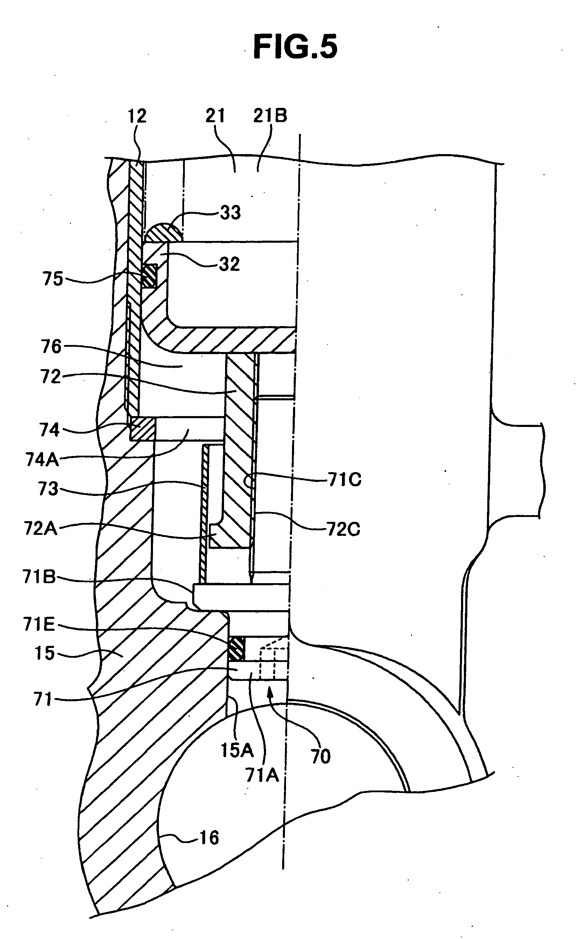

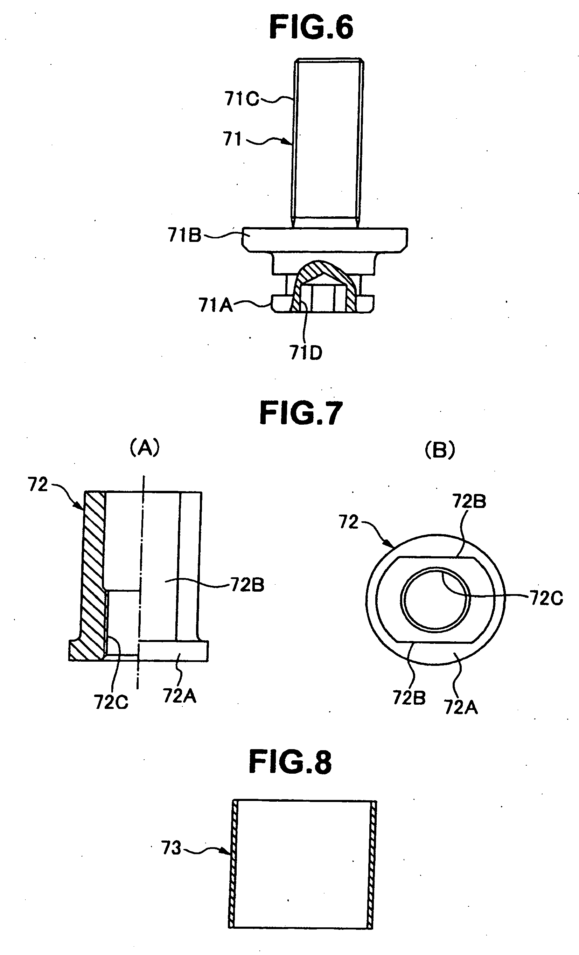

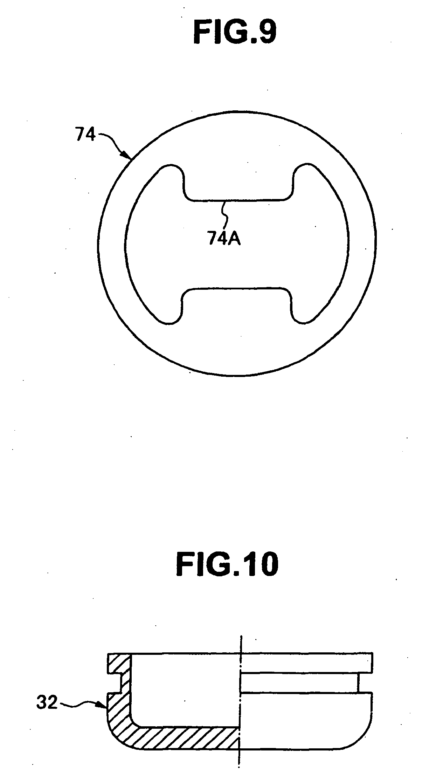

As shown in FIG. 5, according to the spring load adjusting apparatus 70, the lower spring receiver 32 is supported by an adjusting bolt 71 provided on the side of a bottom (axle bracket 15) of the inner tube 12, the lower spring receiver 32 is vertically moved by threadedly moving the adjusting bolt 71, and the spring load of the suspension spring 33 is adjusted. This will be explained concretely.
(1) An operating portion 71A of the adjusting bolt 71 is inserted into an operation hole 15A formed in an axle bracket 15 before it is threadedly engaged with the opening of the lower end of the inner tube 12 on the center line passing through the axle mounting hole 16 from a side facing the inner side of the inner tube 12. As shown in FIG. 6, the adjusting bolt 71 includes the operating portion 71A, a flange portion 71B having a larger diameter than that of the operating portion 71A, and a screw portion 71C. The operating portion 71A is provided at its end surface with a tool stop hexagonal hole 71D, and an O-ring 71E is fitted in an outer peripheral groove of the operating portion 71A. The operating portion 71A of the adjusting bolt 71 is lower end inserted into the operation hole 15A together with the O-ring 71E. The flange portion 71B is supported on an inner surface around the operation hole 15A of the axle bracket 15 to prevent the flange portion 71B from being pulled outside and in this state. The hexagonal hole 71D of the operating portion 71A faces outside (axle mounting hole 16) from the operation hole 15A.
(2) An adjusting nut 72 is threadedly engaged with a screw portion 71C of the adjusting bolt 71 which is to face the inside of the inner tube 12. As shown in FIG. 7, the adjusting nut 72 rises a cylindrical irregularly shaped portion 72B from a flange portion 72A, and the irregularly shaped portion 72B is provided at its inner periphery with a screw portion 72C. The irregularly shaped portion 72B is provided at its cylindrical outer surface with a parallel flat portion. The screw portion 72C of the adjusting nut 72 is threadedly engaged with the screw portion 71C of the adjusting bolt 71 from the side of the flange portion 72A. The flange portion 72A stops at a lower surface of a later-described rotation preventing washer 74 to limit the upward stroke end of the adjusting nut 72.
(3) A collar 73 mounted on a periphery of the adjusting nut 72 is placed on the flange portion 71B of the adjusting bolt 71. As shown in FIG. 8, the collar 73 is interposed between the flange portion 71B of the adjusting bolt 71 and the lower surface of the later-described rotation preventing washer 74 so that the adjusting bolt 71 can not be pushed from outside.
(4) The axle bracket 15 is threadedly engaged with the opening of the lower end of the inner tube 12. At that time, the rotation preventing washer 74 is sandwiched between the lower end surface of the inner tube 12 and the inner peripheral step surface of the axle bracket 15 under pressure. As shown in FIG. 9, the rotation preventing washer 74 includes an irregularly shaped rotation preventing slit 74A, and the irregularly shaped portion 72B of the adjusting nut 72 described in (2) is inserted into the irregularly shaped slit 74A. With this, the adjusting nut 72 is prevented from rotating by the rotation preventing washer 74 with respect to the threading motion of the adjusting bolt 71, and the adjusting nut 72 straightly moves vertically in the irregularly shaped slit 74A.
(5) The lower spring receiver 32 is inserted into the inner periphery of the inner tube 12, and a back surface of the lower spring receiver 32 pushingly contacts the tip end of the adjusting nut 72. As shown in FIG. 10, the lower spring receiver 32 is of a cup-like shape, a rear surface of a bottom of the cup pushingly contacts the tip end of the adjusting nut 72, and an O-ring 75 is fitted to the cup outer peripheral groove. The lower spring receiver 32 is liquid tightly fitted to the inner periphery of the inner tube 12 together with the O-ring 75, and an oil chamber 21 in an upper portion of the lower spring receiver 32 is liquid tightly sealed against a back surface chamber 76 (space for accommodating the adjusting nut 72, the collar 73 and the rotation preventing washer 74 between the adjusting bolt 71 and the lower spring receiver 32) of the lower spring receiver 32. Then, the suspension spring 33 is inserted into the inner tube 12, and the suspension spring 33 is supported by the lower spring receiver 32.

In a state in which the hydraulic shock absorber 10 is assembled, if the adjusting bolt 71 is threadedly moved through the operating portion 71A of the adjusting bolt 71 by a tool which is inserted into the operation hole 15A from the axle mounting hole 16 of the axle bracket 15, the adjusting nut 72 vertically moves, and the lower spring receiver 32 which is in contact with the adjusting nut 72 vertically moves. The lower spring receiver 32 adjusts an initial length of the suspension spring 33 between the upper spring receiver 31 on the side of the piston rod 23 and the lower spring receiver 32, and a spring load of the suspension spring 33 is adjusted.

The following effects can be obtained by the present example.
(a) The adjusting bolt 71 is turnably provided on the side of the bottom of the inner tube 12, and the machining operation and the assembling operation of parts can be simplified as compared with a technique in which sliding parts such as the plunger are assembled.
(b) A load of the suspension spring 33 is supported directly by the adjusting bolt 71, the sealing structure of working oil can be simple, and its reliability is also enhanced.
(c) The adjusting bolt 71 is turned and operated from outside in a state in which the adjusting bolt 71 is prevented from being pulled out and supported on the inner surface of the bottom of the inner tube 12, the adjusting nut 72 which is prevented from rotating can move straightly, and the lower spring receiver 32 supported by the adjusting nut 72 at its back can be moved vertically.
(d) The working oil chamber 21 in the upper portion of the lower spring receiver 32 is sealed against the back surface chamber 76 of the lower spring receiver 32 in the inner tube 12 and with this, the vertical motion of the lower spring receiver 32 in the inner tube 12 vertically moves the oil level in the oil reservoir chamber 22 through the working oil chamber 21 of the inner tube 12. Therefore, the spring load of the suspension spring 33 is adjusted by the vertical motion of the lower spring receiver 32, the air chamber 22B is expanded and shrunk by the rise of the oil level in the oil reservoir chamber 22 and as a result, a spring load of an air spring can also be adjusted.
(e) The washer 74 sandwiched between the inner tube 12 and the axle bracket 15 under pressure is provided with the irregularly shaped rotation preventing slit 74A for the adjusting nut 72 and thus, the adjusting nut 72 can easily be prevented from rotating.
(f) The collar 73 which disables the adjusting bolt 71 from being pushed from outside is interposed between the flange portion 71B of the adjusting bolt 71 and a lower surface of the washer 74. Thus, the adjusting bolt 71 can be prevented from being pushed in from outside.

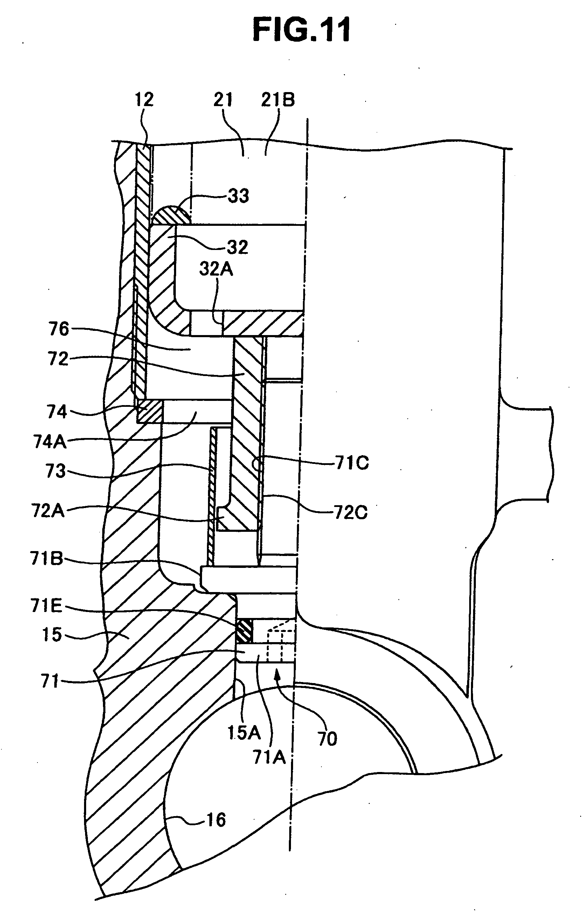

A modification shown in FIG. 11 is different from the embodiment shown in FIG. 5 in that the lower spring receiver 32 is not provided at its outer periphery with the O-ring 75, and the lower spring receiver 32 is provided at its cup bottom with a through hole 32A. The oil chamber 21 in the upper portion of the lower spring receiver 32 is in communication with the back surface chamber 76 of the lower spring receiver 32 in the inner tube 12. According to the modification, only the spring load of the suspension spring 33 can be adjusted by the vertical motion of the lower spring receiver 32 caused by the threading motion of the adjusting bolt 71.

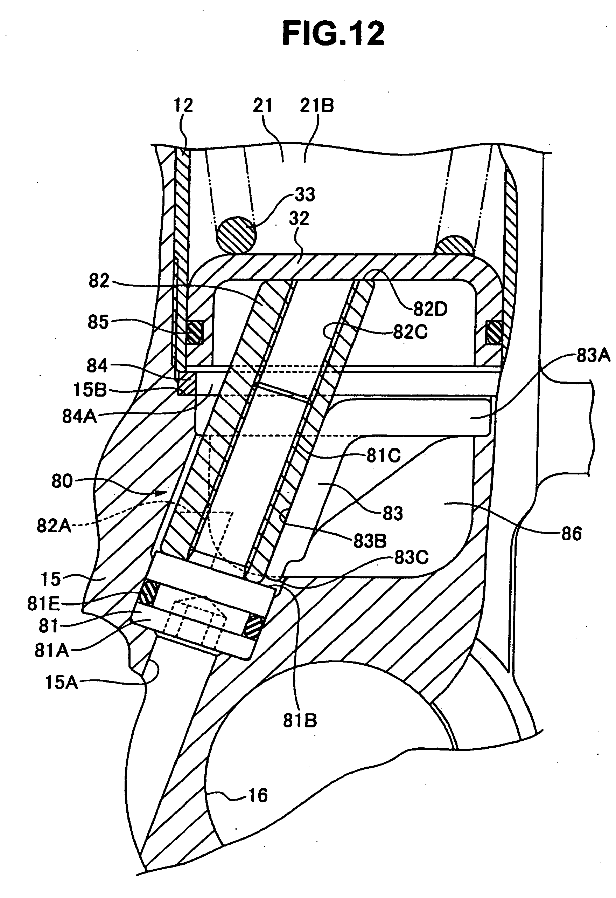

### (Second example which does not form past of the invention but which is useful for a better comprehension of the invention) (FIGS. 12 to 18)

The second example is different from the first example in that the spring load adjusting apparatus 70 is changed to a spring load adjusting apparatus 80.

The spring load adjusting apparatus 80 vertically moves the lower spring receiver 32 and adjusts the spring load of the suspension spring 33. The spring load adjusting apparatus 80 will be explained below.

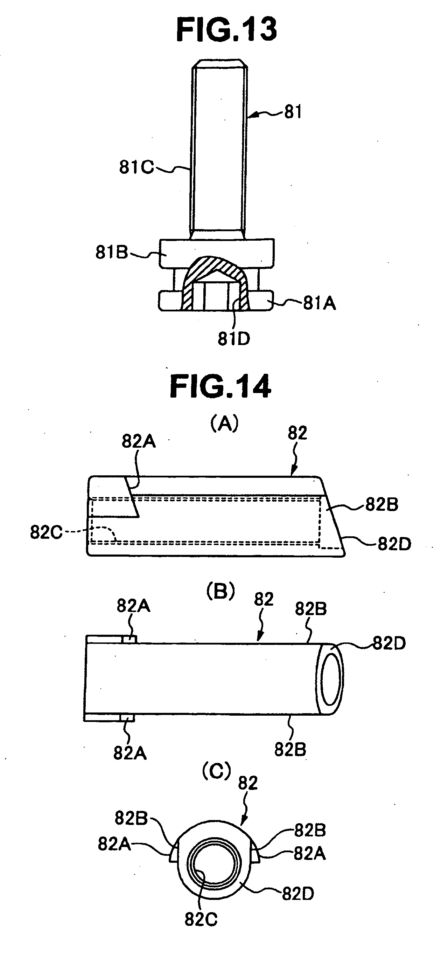

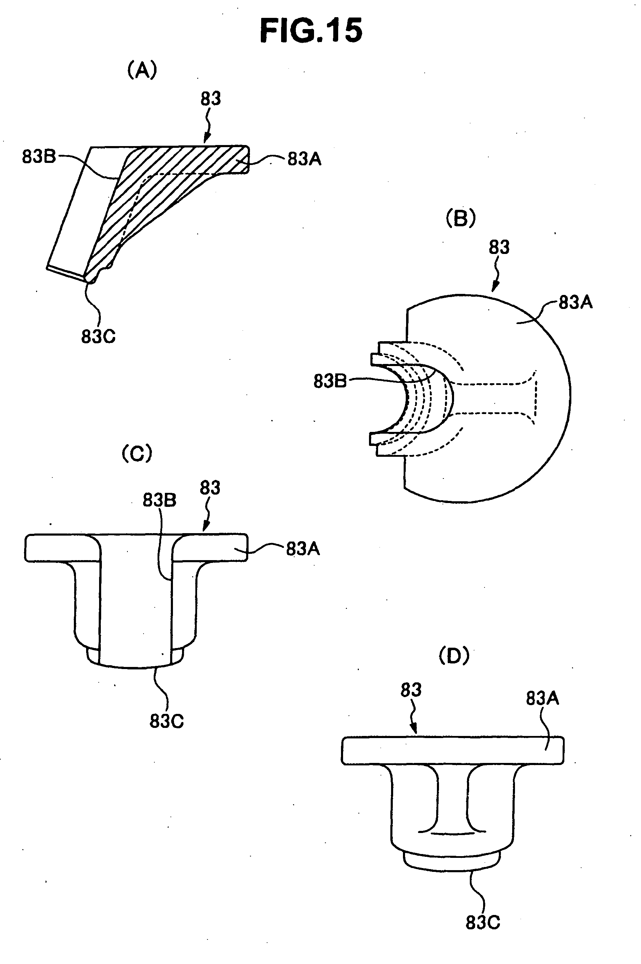

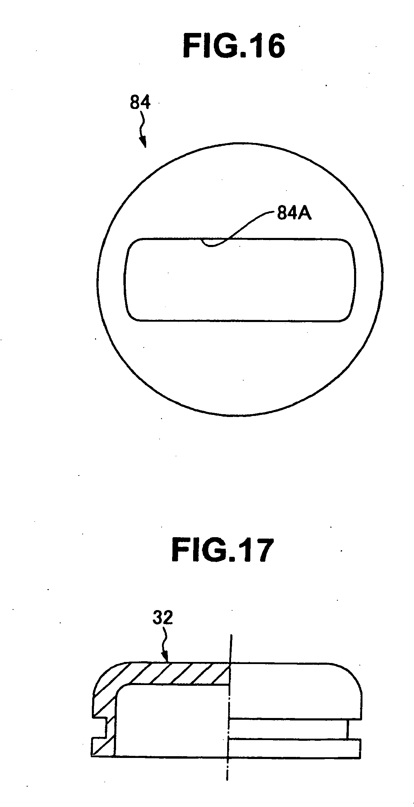

As shown in FIG. 12, the spring load adjusting apparatus 80 supports the lower spring receiver 32 by an adjusting bolt 81 provided such as to face outside at a position (near the axle mounting hole 16) deviated from the axle mounting hole 16 of the axle bracket 15 constituting a bottom of the inner tube 12. The spring load adjusting apparatus 80 vertically moves the lower spring receiver 32 by threading motion of the adjusting bolt 81 to adjust the spring load of the suspension spring 33. This will be explained concretely.
(1) A flange-like operating portion 81A of an adjusting bolt 81 is inserted into a large diameter hole of a step-like operation hole 15A which is formed in the axle bracket 15 before it is threadedly engaged with the opening of the lower end of the inner tube 12 and which is inclined with respect to a center axis passing through the axle mounting hole 16 (which is the same as a center axis of the inner tube 12 passing through the axle mounting hole 16 in a state in which the axle bracket 15 is mounted on the inner tube 12) from a side facing the inside of the inner tube 12. As shown in FIG. 13, the adjusting bolt 81 has the operating portion 81A whose inner end surface is formed into a flange surface 81B, the adjusting bolt 81 includes a screw portion 81C, the operating portion 81A is provided at its outer end surface with a tool retaining hexagonal hole 81D, and the operating portion 81A is provided at its outer peripheral groove with an O-ring 81E. The operating portion 81A of the adjusting bolt 81 is liquid tightly inserted into a large diameter hole of the operation hole 15A together with the O-ring 81E, and in a state in which an outer end surface of the operating portion 81A is supported by a step surface between a large diameter hole and a small diameter hole of the operation hole 15A of the axle bracket 15 and is prevented from being pulled out, the hexagonal hole 81D of the operating portion 81A faces outside from the small diameter hole of the operation hole 15A.
(2) An adjusting nut 82 is threadedly engaged with a screw portion 81C of the adjusting bolt 81 which is to face the inside of the inner tube 12. As shown in FIG. 14, cylindrical irregularly shaped portions 82B rise from stopper faces 82A projecting both sides of the adjusting nut 82, each irregularly shaped portion 82B is provided at its inner periphery with a screw portion 82C, and a tip end of the irregularly shaped portion 82B is formed into a contact surface 82D which pushingly contacts a back surface of the lower spring receiver 32. The irregularly shaped portion 82B is provided at its cylindrical outer surface with a parallel flat portion. A screw portion 82C of the adjusting nut 82 is threadedly engaged with the screw portion 81C of the adjusting bolt 81 from the side of the stopper face 82A. The stopper face 82A stops at a lower surface of a later-described rotation preventing washer 84 to limit the upward stroke end of the adjusting nut 82. The stopper face 82A and the contact surface 82D are in parallel to each other and are inclined with respect to the center axis of the adjusting nut 82, and they are in surface contact with a lower surface of the rotation preventing washer 84 and a back surface of the lower spring receiver 32.
(3) In the axle bracket 15, a step hole 15B is provided directly below an inner periphery where a later-described rotation preventing washer 84 is disposed, and a flange portion 83A of a slider 83 is fitted into the step hole 15B. As shown in FIG. 15, the slider 83 has a U-shaped cylindrical guide 83B extending diagonally downward from the flange portion 83A, and a diagonally downward cylindrical outer surface sandwiched by the parallel flat portion in the irregularly shaped portion 82B of the adjusting nut 82 is slid and guided by an arc guide surface of the guide 83B. The lower end stopper portion 83C of the guide 83B of the slider 83 is opposed to the flange surface 81B of the operating portion 81A of the adjusting bolt 81 inserted into the operation hole 15A of the axle bracket 15, the flange surface 81B of the adjusting bolt 81 pushed from outside of the operation hole 15A is abutted against a stopper portion 83C so that the flange surface 81B can not be pulled in.
(4) The axle bracket 15 is threadedly engaged with the opening of the lower end of the inner tube 12. At that time, the rotation preventing washer 84 is sandwiched between the lower end surface of the inner tube 12 and the inner peripheral step surface of the axle bracket 15 under pressure. As shown in FIG. 16, the rotation preventing washer 84 includes an irregularly shaped rotation preventing slit 84A, and an irregularly shaped portion 82B of the adjusting nut 82 of the (2) is inserted into the irregularly shaped slit 84A. With this, the adjusting nut 82 is prevented from rotating by the rotation preventing washer 84 with respect to the threading motion of the adjusting bolt 81, and the adjusting nut 82 straightly moves vertically in the irregularly shaped slit 84A.
(5) The lower spring receiver 32 is inserted into the inner periphery of the inner tube 12, and a back surface of the lower spring receiver 32 pushingly contacts the contact surface 82D on the tip end of the adjusting nut 82. As shown in FIG. 17, the lower spring receiver 32 is of a reversed cup-like shape, a back surface of a bottom of the cup pushingly contacts the contact surface 82D of the adjusting nut 82, and an O-ring 85 is fitted to an outer peripheral groove of the cup. The lower spring receiver 32 is lower end fitted into the inner periphery of the inner tube 12 together with the O-ring 85, and the oil chamber 21 in the upper portion of the lower spring receiver 32 is liquid tightly sealed against a back surface chamber 86 (space for accommodating the adjusting nut 82, the slider 83 and the rotation preventing washer 84 between the adjusting bolt 81 and the lower spring receiver 32). Then, the suspension spring 33 is inserted into the inner tube 12 and the suspension spring 33 is supported by the lower spring receiver 32.

The hydraulic shock absorber 10 is assembled, if the adjusting bolt 81 is threadedly moved through the operating portion 81A of the adjusting bolt 81 by a tool inserted into the operation hole 15A of the axle bracket 15, the adjusting nut 82 is vertically moved, and the lower spring receiver 32 which is in contact with the adjusting nut 82 is vertically moved. The lower spring receiver 32 adjusts the initial length of the suspension spring 33 between the upper spring receiver 31 on the side of the piston rod 23, and the spring load of the suspension spring 33 is adjusted.

According to the example, the following effects can be obtained.
(a) The adjusting bolt 81 is turnably provided on the side of the bottom of the inner tube 12, and the machining operation and the assembling operation of parts can be simplified as compared with a technique in which sliding parts such as the plunger are assembled.
(b) A load of the suspension spring 33 is supported directly by the adjusting bolt 81, the sealing structure of working oil can be simple, and its reliability is also enhanced.
(c) Since the adjusting bolt 81 is provided on the bottom such as to face the outside at a position deviated from the axle mounting hole 16 of the inner tube 12, the spring load of the suspension spring 33 can be adjusted in a state in which the hydraulic shock absorber 10 is not detached from the axle.
(d) The adjusting bolt 81 is turned and operated from outside in a state in which the adjusting bolt 81 is prevented from being pulled out and supported on the inner surface of the bottom of the inner tube 12, the adjusting nut 82 which is prevented from rotating can move straightly, and the lower spring receiver 32 supported by the adjusting nut 82 at its back can be moved vertically.
(e) The working oil chamber 21 in the upper portion of the lower spring receiver 32 is sealed against the back surface chamber 86 of the lower spring receiver 32 in the inner tube 12 and with this, the vertical motion of the lower spring receiver 32 in the inner tube 12 vertically moves the oil level in the oil reservoir chamber 22 through the working oil chamber 21 of the inner tube 12. Therefore, the spring load of the suspension spring 33 is adjusted by the vertical motion of the lower spring receiver 32, the air chamber is expanded and shrunk by the rise of the oil level in the oil reservoir chamber 22 and as a result, a spring load of an air spring can also be adjusted.
(f) The washer 84 sandwiched between the inner tube 12 and the axle bracket 15 under pressure is provided with the rotation preventing irregularly shaped slit 84A for the adjusting nut 82 and thus, the adjusting nut 82 can easily be prevented from rotating.
(g) The slider 83 is provided on a lower portion of the washer 84 in the bottom of the inner tube 12, the outer surface of the adjusting nut 82 is slid and guided by the slider 83 and with this, the adjusting nut 82 which is inclined and disposed with respect to the center axis of the inner tube 12 together with the adjusting bolt 81 is prevented from receiving the spring load acting along the center axis of the inner tube 12 and from falling. Further, it is possible to prevent the adjusting bolt 81 from being pushed in from outside.

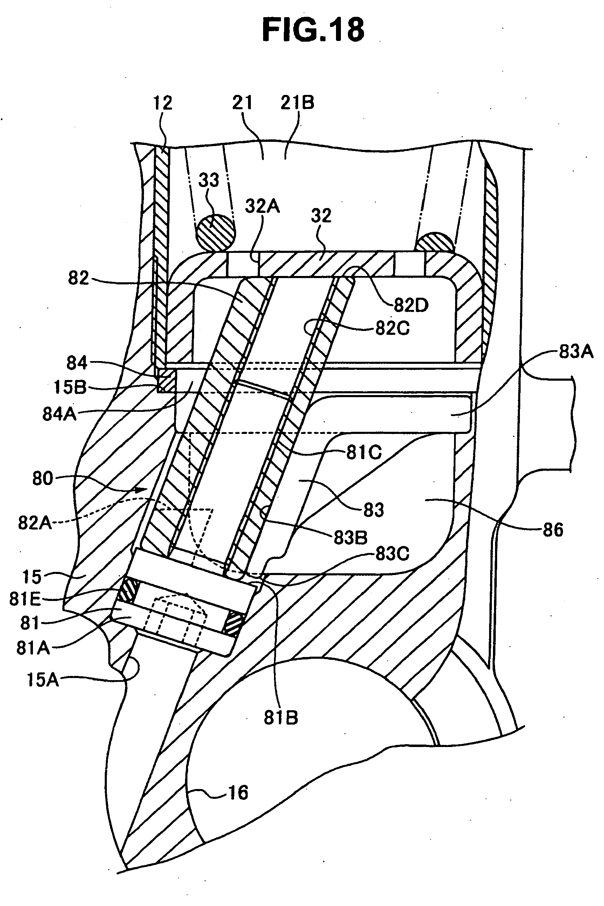

A modification shown in FIG. 18 is different from the example shown in FIG. 12 in that the O-ring 85 is not provided on the outer periphery of the lower spring receiver 32, and a through hole 32A is formed in the cup bottom of the lower spring receiver 32. The oil chamber 21 in the upper portion of the lower spring receiver 32 is brought into communication with the back surface chamber 86 of the lower spring receiver 32 in the inner tube 12. According to this modification, only the spring load of the suspension spring 33 can be adjusted by the vertical motion of the lower spring receiver 32 caused by the threading motion of the adjusting bolt 81.

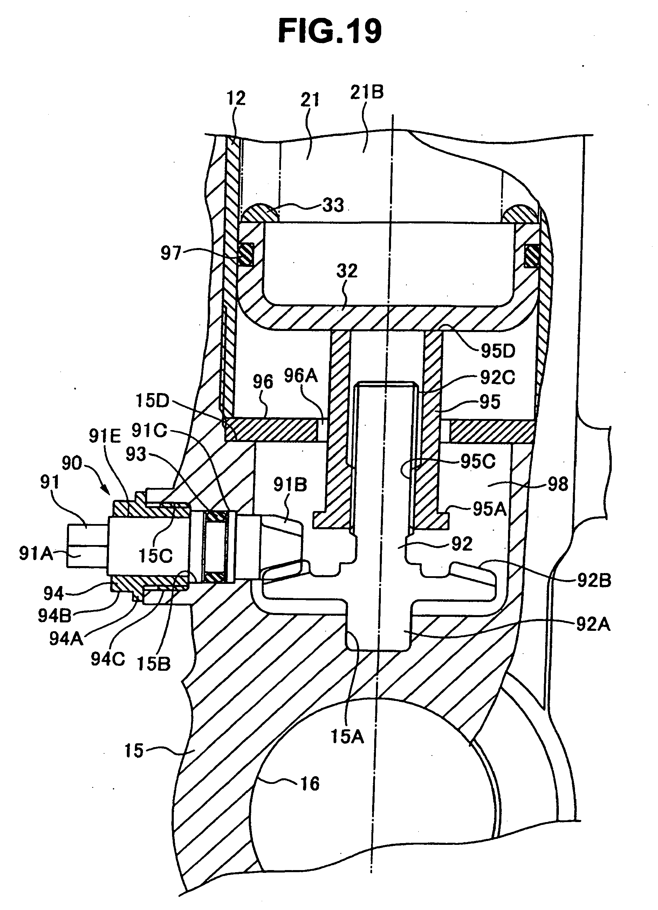

### (Third example which does not form past of the invention but which is useful for a better comprehension of the invention) (FIGS. 19 to 25)

The third example is different from the first example in that the spring load adjusting apparatus 70 is changed to a spring load adjusting apparatus 90.

The spring load adjusting apparatus 90 vertically moves the lower spring receiver 32 and adjusts the spring load of the suspension spring 33. The spring load adjusting apparatus 90 will be explained below.

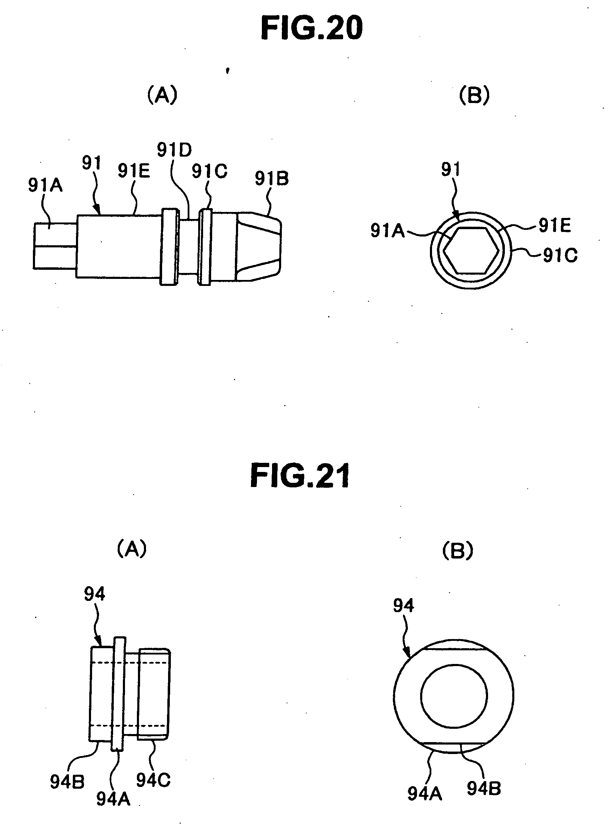

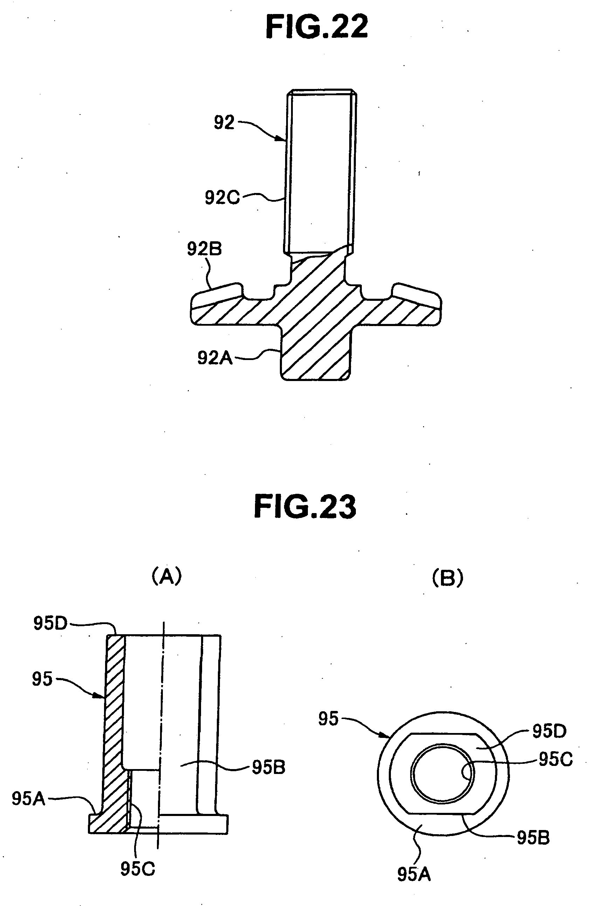

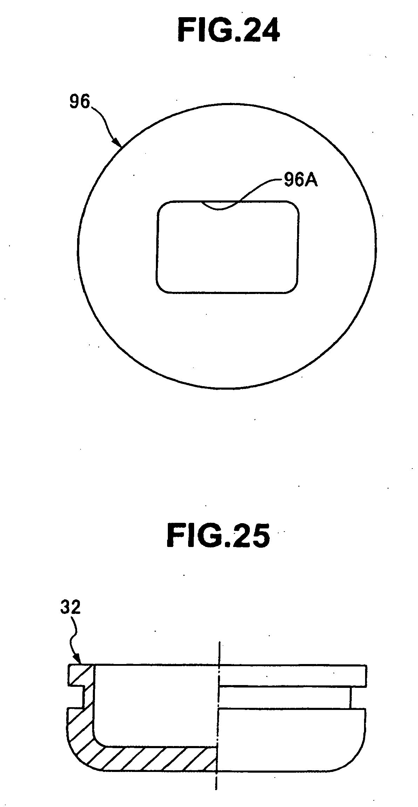

As shown in FIG. 19, the spring load adjusting apparatus 90 has an adjuster 91 which is located on the bottom of the inner tube 12 and which faces the outside at a position (diagonally upper portion of the axle mounting hole 16) deviated from the axle mounting hole 16 of the axle bracket 15 constituting the bottom of the inner tube 12. The lower spring receiver 32 is supported by an adjusting bolt 92 provided on an inside bottom of the axle bracket 15 which constitutes the bottom of the inner tube 12. The adjusting bolt 92 is threadedly moved by operation added to the adjuster 91 from outside, the lower spring receiver 32 is vertically moved by the threading motion of the adjusting bolt 92, thereby adjusting the spring load of the suspension spring 33. This will be explained concretely below.
(1) A rotation shaft 92A of the adjusting bolt 92 is inserted into a bearing hole 15A formed in an inside bottom surface of the axle bracket 15 on the center axis (the same as the center axis passing through the axle mounting hole 16 of the inner tube 12 in a state where the axle bracket 15 is mounted on the inner tube 12) passing through the axle mounting hole 16 of the axle bracket 15 before it is threadedly engaged with the opening of the lower end of the inner tube 12, the adjusting bolt 92 is allowed to stand upright on the bottom of the inner tube 12 (axle bracket 15) to be supported. As shown in FIG. 22, the adjusting bolt 92 includes a bevel gear 92B around an upper portion of the rotation shaft 92A, the bevel gear 92B is coaxial with the rotation shaft 92A, and a screw portion 92C which is coaxial with the rotation shaft 92A extends from an upper portion of the rotation shaft 92A.
(2) The adjuster 91 is inserted from outside into the step hole 15B formed in the axle bracket 15 such as to penetrate the axle bracket 15 in a diagonally upper portion with respect to the axle mounting hole 16 of the axle bracket 15 such as to intersect, at right angles, with the center axis (the same as the center axis of the adjusting bolt 92) passing through the axle mounting hole 16 of the axle bracket 15 before it is threadedly engaged with the opening of the lower end of the inner tube 12. As shown in FIG. 20, the adjuster 91 is provided at its one end with a tool engaging hexagonal rod-like operating portion 91A and at its other end with a pinion 91B, includes an annular groove 91D through which the O-ring 93 is attached to the intermediate large diameter portion 91C, and includes an intermediate small diameter portion 91E for attaching the plug 94 between the operating portion 91A and the intermediate large diameter portion 91C. As shown in FIG. 21, the plug 94 is of a cylindrical shape which is inserted into the intermediate small diameter portion 91E of the adjuster 91, the plug 94 includes a fastening operating portion 94B forming a parallel flat portion on the base end flange portion 94A, and includes a screw portion 94C which is threadedly engaged with the screw portion 15C of the step hole 15B. In a state in which the O-ring 93 is attached to the annular groove 91D of the adjuster 91, the adjuster 91 is liquid tightly inserted into the step hole 15B of the axle bracket 15, an end surface of the intermediate large diameter portion 91C is abutted against the step portion of the step hole 15B, a plug 94 is attached to the intermediate small diameter portion 91E of the adjuster 91, the screw portion 94C is threadedly engaged with the screw portion 15C of the axle bracket 15 using the fastening operating portion 94B, and a base end flange portion 94A of the plug 94 is abutted against an outer end surface around the step hole 15B of the axle bracket 15. With this, the intermediate large diameter portion 91C of the adjuster 91 is sandwiched such that it can be rotated and operated between the end surface of the plug 94 and the step portion of the step hole 15B, the adjuster 91 is rotatably supported by the bottom (axle bracket 15) of the inner tube 12 in a state in which the adjuster 91 is prevented from being pulled out, the operating portion 91A of the adjuster 91 faces outside, and a pinion 91B of the adjuster 91 is meshed with a gear 92B of the adjusting bolt 92.
(3) The adjusting nut 95 is threadedly engaged with the screw portion 92C of the adjusting bolt 92 located inside of the inner tube 12. As shown in FIG. 23, the adjusting nut 95 rises a cylindrical irregularly shaped portion 95B from a stopper 95A projecting from the entire periphery, the irregularly shaped portion 95B is provided at its inner periphery with a screw portion 95C, and a tip end of the irregularly shaped portion 95B is formed into a contact surface 95D which pushingly contacts a back surface of the lower spring receiver 32. The irregularly shaped portion 95B is provided at its cylindrical outer surface with a parallel flat portion. The adjusting nut 95 threadedly engages the screw portion 95C with the screw portion 92C of the adjusting bolt 92 from the side of the stopper 95A. The stopper 95A stops at a lower surface of a later-described rotation preventing washer 96 to limit the upward stroke end of the adjusting nut 95. The stopper 95A and the contact surface 95D are in parallel to each other, intersect with the center axis of the adjusting nut 95 at right angles, and come into surface contact with the lower surface of the rotation preventing washer 96 and a back surface of the lower spring receiver 32, respectively.
(4) The axle bracket 15 is threadedly engaged with the lower end opening of the inner tube 12. At that time, the rotation preventing washer 96 is sandwiched between the lower end surface of the inner tube 12 and an inner peripheral step surface 15D of the axle bracket 15 under pressure. As shown in FIG. 24, the rotation preventing washer 96 includes an irregularly shaped rotation preventing slit 96A, and an irregularly shaped portion 95B of the adjusting nut 95 of the (3) is inserted into the irregularly shaped slit 96A. With this, the adjusting nut 95 is prevented from rotating by the rotation preventing washer 96 with respect to the threading motion of the adjusting bolt 92, and the adjusting nut 95 straightly and vertically moves in the irregularly shaped slit 96A.
(5) The lower spring receiver 32 is inserted into the inner periphery of the inner tube 12, a back surface of the lower spring receiver 32 pushingly contacts the contact surface 95D on the tip end of the adjusting nut 95. As shown in FIG. 25, the lower spring receiver 32 is of a cup-like shape, a bottom of the cup pushingly contacts the contact surface 95D of the adjusting nut 95, and an O-ring 97 is fitted to the cut outer peripheral groove. The lower spring receiver 32 is liquid tightly fitted into the inner periphery of the inner tube 12 together with the O-ring 97, and the lower spring receiver 32 liquid tightly seals the oil chamber 21 in the upper portion of the lower spring receiver 32 against the back surface chamber 98 (space for accommodating the adjusting nut 95 and the rotation preventing washer 96 between the adjusting bolt 92 and the lower spring receiver 32). Then, the suspension spring 33 is inserted into the inner tube 12, and the suspension spring 33 is supported by the lower spring receiver 32.

In a state where the hydraulic shock absorber 10 is assembled, the operating portion 91A of the adjuster 91 is rotated and operated by a tool, and if the adjusting bolt 92 is threadedly moved, the adjusting nut 95 vertically moves, and the lower spring receiver 32 which is in contact with the adjusting nut 95 vertically moves. The lower spring receiver 32 adjusts the initial length of the suspension spring 33 between the upper spring receiver 31 on the side of the piston rod 23, and adjusts the spring load of the suspension spring 33.

According to the example, the following effects can be obtained.
(a) The inner tube 12 is provided at its bottom with the adjuster 91 and the adjusting bolt 92, and the machining operation and the assembling operation of parts can be simplified as compared with a technique in which sliding parts such as the plunger are assembled.
(b) A load of the suspension spring 33 is supported directly by the adjusting bolt 92, the sealing structure of working oil can be simple, and its reliability is also enhanced.
(c) Since the adjust bolt 91 is provided on the bottom such that the adjust bolt 91 faces the outside at the position deviated from the axle mounting hole 16 of the inner tube 12, the spring load of the suspension spring 33 can be adjusted without detaching the hydraulic shock absorber 10 from the axle.
(d) In a state where the adjusting bolt 92 uprightly rises from the bottom of the inner tube 12 and the adjusting bolt 92 is rotatably supported, the adjusting bolt 92 can be threadedly moved by operation added to the adjuster 91 from outside, the adjusting nut 95 which is prevented from rotating can move straightly, and the lower spring receiver 32 which is supported by the adjusting nut 95 at its back surface can vertically move.
(e) Since the pinion 91B of the adjuster 91 meshes with the gear 92B of the adjusting bolt 92, the adjusting bolt 92 can threadedly be moved by the rotating operation added to the operating portion 91A of the adjuster 91.
(f) The working oil chamber 21 in the upper portion of the lower spring receiver 32 is sealed against the back surface chamber 98 of the lower spring receiver 32 in the inner tube 12 and with this, the vertical motion of the lower spring receiver 32 in the inner tube 12 vertically moves the oil level in the oil reservoir chamber 22 through the working oil chamber 21 of the inner tube 12. Therefore, the spring load of the suspension spring 33 is adjusted by the vertical motion of the lower spring receiver 32, the air chamber 22B is expanded and shrunk by the rise of the oil level in the oil reservoir chamber 22 and as a result, a spring load of an air spring can also be adjusted.
(g) The washer 96 sandwiched between the inner tube 12 and the axle bracket 15 under pressure is provided with the irregularly shaped rotation preventing slit 96A for the adjusting nut 95 and thus, the adjusting nut 95 can easily be prevented from rotating.

In another example of the invention, the lower spring receiver 32 may not be provided at its outer periphery with the O-ring 97, and the lower spring receiver 32 may be provided at its cup bottom with the through hole. The oil chamber 21 in the upper portion of the lower spring receiver 32 is in communication with the back surface chamber 98 of the lower spring receiver 32 in the inner tube 12. According to this example, only the spring load of the suspension spring 33 can be adjusted by the vertical motion of the lower spring receiver 32 caused by the threading motion of the adjusting bolt 92 by the rotation operating portion of the adjuster 91.

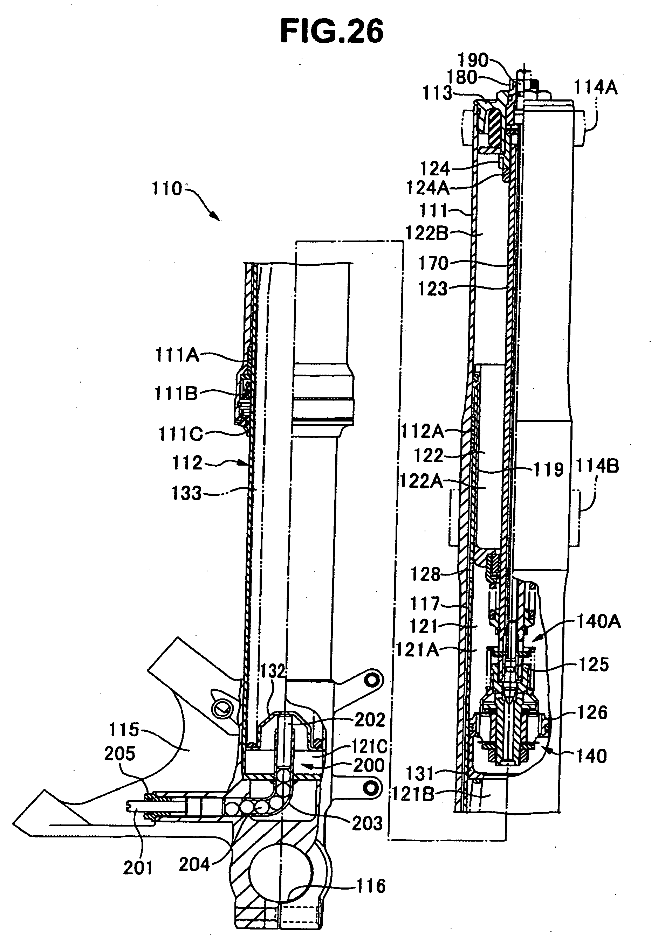

### (First Embodiment) (FIGS. 26 to 32)

The first embodiment is substantially different from the first example in that the damping force generating apparatus 40 is replaced by a damping force generating apparatus 140, and the spring load adjusting apparatus 70 is replaced by a spring load adjusting apparatus 200.

A front fork (a hydraulic shock absorber) 110 is an inverted front fork in which an outer tube 111 is disposed on the side of the vehicle body, and an inner tube 112 is disposed on the side of a wheel. As shown in FIGS. 26 to 28, the inner tube 112 is slidably inserted into the outer tube 111 through a guide bush 111A fixed to an inner periphery of an opening of a lower end of the outer tube 111 and a guide bush 112A fixed to an outer periphery of an opening of an upper end of the inner tube 112. A reference symbol 111B represents an oil seal, and a reference symbol 111C represents a dust seal. A cap 113 is liquid-tightly threadedly engaged with the opening of the upper end of the outer tube 111, and the outer tube 111 is provided at its outer periphery with vehicle body-side mounting members 114A and 114B. An axle bracket 115 is liquid-tightly threadedly engaged with the opening of the lower end of the inner tube 112 to form a bottom of the inner tube 112, and the axle bracket 115 is formed with an axle mounting hole 116.

The front fork 110 defines an annular oil chamber 117 defined by the inner periphery of the outer tube 111, the outer periphery of the inner tube 112 and the two guide bushes 111A and 112A.

The front fork 110 is provided with a partition wall member 119 liquid tightly through an O-ring around an inner periphery of an upper end side of the inner tube 112, a working oil chamber 121 is defined in the partition wall member 119 at a location lower than the rod guide portion 119A, and an oil reservoir chamber 122 is defined in the partition wall member 119 at a location higher than the rod guide portion 119A. In the oil reservoir chamber 122, its lower region is an oil chamber 122A, and an upper region is an air chamber 122B.

In the front fork 110, a piston rod 123 mounted on the outer tube 111 is slidably inserted into the rod guide portion 119A of the partition wall member 119. More specifically, a hollow piston rod 123 is threadedly engaged with a mounting collar 124 threadedly engaged with a lower end of a center portion of a cap 113, and this is fixed by a lock nut 124A.

A piston 126 which comes into slide contact with an inner periphery of an inner tube 112 is fixed to a piston bolt 125 threadedly engaged with a tip end of the piston rod 123 inserted into the inner tube 112 from a rod guide portion 119A of the partition wall member 119, and the oil chamber 121 is defined into a piston rod-side oil chamber 121A in which the piston rod 123 is accommodated and into a piston side oil chamber 121B in which the piston rod 123 is not accommodated. The piston 126 is fixed by a nut 127.

The front fork 110 always brings the annular oil chamber 117 into communication with the piston rod-side oil chamber 121A through an oil hole 128 formed in the inner tube 112.

An upper spring receiver 131 of the front fork 110 pushingly contacts the lower end surface facing the piston side oil chamber 121B of the piston 126, a lower spring receiver 132 is disposed on a bottom of the inner tube 112 formed by the axle bracket 115, and a suspension spring 133 is interposed between the upper spring receiver 131 and the lower spring receiver 132. The front fork 110 absorbs an impact force received from a road surface when the vehicle runs by expansion, compression and vibration of the suspension spring 133. At that time, the spring load adjusting apparatus 200 vertically moves the lower spring receiver 132 and the spring load of the suspension spring 133 can be adjusted.

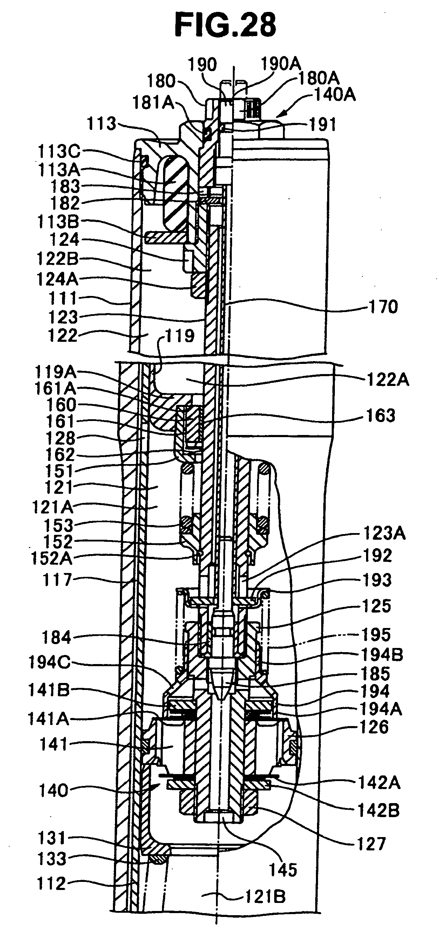

In the front fork 110, the piston 126 has a damping force generating apparatus 140 (FIG. 28).

The damping force generating apparatus 140 includes a compression side flow path 141 and an expansion side flow path 142 (not shown). The compression side flow path 141 is opened and closed by a compression side disk valve 141A (a compression side damping valve) which is backed up by a valve stopper 141B. The expansion side flow path 142 is opened and closed by an expansion side disk valve 142A (an expansion side damping valve) which is backed up by a valve stopper 142B. The valve stopper 141B, the valve 141A, the piston 126, the valve 142A, and the valve stopper 142B constitute a valve assembly inserted into the piston bolt 125, and the valve assembly is sandwiched and fixed by the nut 127 which is threadedly engaged with the piston bolt 125.

The damping force generating apparatus 140 is provided at a center of the cap 113 with a later-described damping force adjusting apparatus 140A. A needle valve 185 of the damping force adjusting apparatus 140A is inserted into a hollow portion of the piston rod 123, and an opening degree of the bypass passage 145 provided in the piston rod 123 is adjusted by vertical motion of a needle valve 185. The bypass passage 145 bypasses the piston 126, and brings the piston rod-side oil chamber 121A and the piston side oil chamber 121B into communication with each other.

In a compression side stroke, the damping force generating apparatus 140 generates a compression side damping force by a passage resistance of the bypass passage 145 whose opening degree is adjusted by the needle valve 185 in the low speed region, and generates a compression side damping force by bending deformation of the compression side disk valve 141Ain the intermediate/high speed region. In an expansion side stroke, the damping force generating apparatus 140 generates the expansion side damping force by the passage resistance of the bypass passage 145 whose opening degree is adjusted by the needle valve 185 in the low speed region, and generates the expansion side damping force by bending deformation of the expansion side disk valve 142A in the intermediate/high speed region. The expansion, compression and vibration of the suspension spring 133 are controlled by the compression side damping force and the expansion side damping force.

In the front fork 110, a stopper rubber 113A and a stopper plate 113B on which an upper end of the partition wall member 119 provided on the inner tube 112 strikes in the most compressed stroke are fixed to a lower end surface of the cap 113, and the most compressed stroke is limited by the stopper rubber 113A.

The front fork 110 has a rebound spring 153 interposed between a spring sheet 151 which is swaged and fixed to a lower end surface of the partition wall member 119 on the side of an upper end of the inner tube 112 facing the piston rod-side oil chamber 121A, and a spring sheet 152 retained to a stopper ring 152A provided on the piston rod 123. When the front fork 110 is expanded most, the partition wall member 119 pressurizes the rebound spring 153 between the spring sheet 152 and the partition wall member 119, thereby limiting the most expanded stroke.

Therefore, in the front fork 110, a cross-sectional area S1 of the annular oil chamber 117 comprising an annular gap between the outer tube 111 and the inner tube 112 is greater than a cross-sectional area (area surrounded by an outer diameter) S2 of the piston rod 123 (S1>S2 including S1≥S2).

The rod guide portion 119A of the partition wall member 119 is provided with a check valve 160 which permits oil to flow from the oil reservoir chamber 122 into the piston rod-side oil chamber 121A in the compression side stroke, and which prevents oil from flowing from the piston rod-side oil chamber 121A into the oil reservoir chamber 122 in the expansion side stroke. A valve chamber 161 is provided in an inner periphery of the rod guide portion 119A of the partition wall member 119, and the check valve 160 is accommodated between the step portion 161A on the upper end of the valve chamber 161 and the backup spring 153 on the spring sheet 151 provided on the lower end of the valve chamber 161. The check valve 160 is shorter than a distance between the step portion 161A and the spring sheet 151, and a lateral groove is formed in the lower end surface of the check valve 160. The check valve 160 is provided with an inner periphery of the valve chamber 161 provided in the rod guide portion 119A of the partition wall member 119 and it can vertically displace. The outer periphery of the check valve 160 formed a flow path between the outer periphery of the check valve 160 and the inner periphery of the valve chamber 161 provided in the rod guide portion 119A of the partition wall member 119. Oil flows through the flow path from the oil reservoir chamber 122 into the piston rod-side oil chamber 121A. A bush 163 which slidably supports the piston rod 123 is press-fitted into the check valve 160. In the compression side stroke, the check valve 160 moves downward together with the piston rod 123 which enters the inner tube 112, and stops at the spring sheet 151, and forms a gap between the check valve 160 and the step portion 161A, and oil in the oil reservoir chamber 122 can be flowed into the piston rod-side oil chamber 121A through a gap with respect to the step portion 161A from the lateral groove through the outer periphery thereof. In the expansion side stroke, the check valve 160 moves upward together with the piston rod 123 which retreats from the inner tube 112, stops at the step portion 161A, closes the gap between the check valve 160 and the step portion 161A, and prevents oil in the piston rod-side oil chamber 121A from being discharged into the oil reservoir chamber 122 in the opposite path of the compression side stroke.

No oil seal is mounted on a periphery of the piston rod 123 of the rod guide portion 119A of the partition wall member 119 and thus, a fine flow path (orifice) 164 (not shown) which brings the piston rod-side oil chamber 121A and the oil reservoir chamber 122 into communication with each other is formed by a fine gap (fine gap formed by the check valve 160 between the step portion 161A) formed around the piston rod 123 by the bush 163 which is press-fitted to the inner periphery of the check valve 160. The fine flow path 164 is formed in the rod guide portion 119A of the partition wall member 119, and the piston rod-side oil chamber 121A and the oil reservoir chamber 122 may be in communication with each other.

The hydraulic shock absorber 110 is operated in the following manner.

### (Compression side stroke)

An entering capacity amount of working oil of the piston rod 123 which enters the inner tube 112 in the compression side stroke is sent to the annular oil chamber 117 from the oil chamber 121A of the inner periphery of the inner tube 112 through the oil hole 128 of the inner tube 112. At that time, since the increased capacity amount ΔS1 (supply amount) of the annular oil chamber 117 is greater than the increased capacity amount ΔS2 of the piston rod 123, a shortage amount (ΔS1-ΔS2) of a necessary supply amount of oil into the annular oil chamber 117 is supplied from the oil reservoir chamber 122 through the check valve 160.

In the compression side stroke, as described above, the compression side damping force is generated by the passenger resistance of the bypass passage 145 whose opening degree is adjusted by the needle valve 144 in the low speed region, and the compression side damping force is generated by the bending deformation of the compression side disk valve 14 1A in the intermediate/high speed region.

### (Expansion side stroke)

In the expansion side stroke, a retreating capacity amount of working oil of the piston rod 123 which is retreated from the inner tube 112 is sent to the oil chamber 121A of the inner periphery of the inner tube 112 through the oil hole 129 of the inner tube 112 from the annular oil chamber 117. At that time, since the reduced capacity amount ΔS1 (discharge amount) of the annular oil chamber 171 is greater than the reduced capacity amount ΔS2 of the piston rod 123, a surplus amount (ΔS1-ΔS2) of oil from the annular oil chamber 117 is discharged into the oil reservoir chamber 122 through the fine flow path 164.

In the expansion side stroke, as described above, the expansion side damping force is generated by the passage resistance of the bypass passage 145 whose opening degree is adjusted by the needle valve 144 in the low speed region, and the expansion side damping force is generated by the bending deformation of the expansion side disk valve 142A in the intermediate/high speed region. The expansion side damping force is also generated by the passage resistance of the fine flow path 164.

The damping force adjusting apparatus 140A will be explained below.

As shown in FIG. 28, the damping force adjusting apparatus 140A includes a single push rod 170 which has a noncircular cross section, in this embodiment, D-shaped cross section and which can move in the rotation direction and axial direction in the hollow portion of the piston rod 123, and a first adjusting portion 180 which moves the push rod 170 in the rotation direction and a second adjusting portion 190 which moves the push rod 170 in the axial direction are coaxially disposed on an upper portion of the front fork 110 and on an extension of the push rod 170. In the damping force adjusting apparatus 140A, a needle valve 185 which slidably engages in the noncircular cross section of the push rod 170 is threadedly engaged with the hollow portion of the piston rod 123, the needle valve 185 is threadedly moved by rotation of the first adjusting portion 180, an opening degree of the bypass passage 145 is adjusted by the needle valve 185, and the damping force can be adjusted by the passage resistance of the bypass passage 145. The damping force adjusting apparatus 140A biases the compression side disk valve 141A in its closing direction by a spring 195 which pushingly contacts the push rod 170 in the axial direction, and the compression side damping force can be adjusted by bending deformation of the compression side disk valve 141A. Structures of the first adjusting portion 180 and the second adjusting portion 190, a damping force adjusting structure using the needle valve 185 and a damping force adjusting structure using the spring 195 will be explained.

### (Structures of first adjusting portion 180 and second adjusting portion 190) (FIG. 28)

The cap 113 constituting a cap assembly is liquid tightly threadedly engaged with an opening of an upper end of the outer tube 111 through the O-ring 113C. The mounting collar 124 is threadedly engaged with the lower end opening of the cap 113, an upper end of the piston rod 123 is threadedly engaged with the mounting collar 124 and is fixed by the lock nut 124A.

The first adjusting portion 180 is liquid tightly inserted into the lower end opening of the center hole of the cap 113 through an O-ring 181A. The first adjusting portion 180 is engaged with the intermediate step portion of the cap 113 in the axial direction so that the first adjusting portion 180 is prevented from being pulled out upward. The first adjusting portion 180 pushingly contacts the flat washer 182 in the axial direction which is placed on an upper end surface of the mounting collar 124 which is threadedly engaged with the lower end opening of the cap 113 so that the first adjusting portion 180 is prevented from being pulled out downward and as a result, the first adjusting portion 180 is rotatably provided on the cap 113 using an operating surface 180A on an upper end outer periphery. The lower end surface of the first adjusting portion 180 which pushingly contacts the flat washer 182 includes a lateral groove, and both side projections of the engaging piece 183 are engaged with the lateral groove almost without play in the rotation direction. An outer periphery of noncircular cross section (D-shaped cross section) of the push rod 170 passes through a noncircular hole (D-shaped hole) formed in the center of the engaging piece 183, the outer periphery is engaged almost without play in the rotation direction, and the outer periphery can slide in the axial direction. With this, the first adjusting portion 180 can move the push rod 170 in the rotation direction.

The second adjusting portion 190 is liquid tightly inserted into the lower end opening of the center hole of the first adjusting portion 180 through an O-ring 191. The second adjusting portion 190 is engaged with an intermediate step portion of the first adjusting portion 180 in the axial direction so that the second adjusting portion 190 is prevented from being pulled out upward. A lower end surface of the second adjusting portion 190 pushingly contacts, without gap in the axial direction, an upper end surface of the push rod 170 which penetrates a noncircular hole of the engaging piece 183 which is engaged with a side of the first adjusting portion 180. The push rod 170 is biased upward by a spring force of a later-described spring 195, and an upper end surface of the push rod 170 always pushingly contacts the lower end surface of the second adjusting portion 190. The second adjusting portion 190 is threadedly moved with respect to the first adjusting portion 180 using the operating groove 190A of the upper end surface, and the push rod 170 can be moved in the axial direction. (Damping force adjusting structure using needle valve 185) (FIG. 28)

An inner base 184 is inserted into a lower end of a hollow portion of the piston rod 123, and a lower end surface of the piston rod 123 and an inner diameter step portion of the piston bolt 125 sandwich and fix a lower end flange of the inner base 184. The inner base 184 may be press-fitted into the hollow portion of the piston rod 123. The needle valve 185 is liquid tightly inserted into the inner periphery of the inner base 184 fixed to the piston rod 123 in this manner, and a screw portion of an intermediate portion of the needle valve 185 is threadedly engaged with an inner periphery of the piston bolt 125. A noncircular cross section of an upper end of the needle valve 185, in this embodiment, a noncircular cross section forming a D-shaped cross section is inserted into a noncircular cross section of a lower end of the push rod 170 almost without play such that the former noncircular cross section can slide in the axial direction and can engage in the rotation direction.

If the first adjusting portion 180 moves the push rod 170 in the rotation direction as described above, the needle valve 185 which is engaged with the push rod 170 in the rotation direction threadedly moves with respect to the piston bolt 125, the needle valve 185 moves forward and rearward with respect to a valve sheet of a vertical hole upper end of the bypass passage 145 provided in the piston bolt 125, the opening degree of the bypass passage 145 is adjusted, and the compression side damping force and the expansion side damping force can be adjusted by passage resistance of the bypass passage 145.

When the first adjusting portion 180 threadedly moves the needle valve 185 through the push rod 170, the needle valve 185 idles with respect to a center hold of a pushing piece 192 for a later-described spring 195, and the spring 195 is not influenced.

### (Damping force adjusting structure using spring 195) (FIG. 28)

Long guide holes 123A extending in the axial direction are provided on both sides of the lower end of the piston rod 123 in the radial direction, and both side projections of the pushing piece 192 are slidably inserted into the guide holes 123A almost without play. A lower end surface of the push rod 170 which is inserted into the hollow portion of the piston rod 123 contacts directly an upper surface of the pushing piece 192, and a noncircular cross section of the needle valve 185 which is inserted into the lower end of the push rod 170 is loosely inserted into a circular hole formed in a center of the pushing piece 192 such that the noncircular cross section can move in the axial direction.

Spring receivers 193 which pushingly contacts both end projections of the pushing piece 192 from below and a valve holding member 194 which pushingly contacts an upper surface (back surface) of the compression side disk valve 141A are disposed around a lower end (piston bolt 125) of the piston rod 123, and a valve holding member spring 195 is interposed between the spring receiver 193 and the valve holding member 194. The spring receiver 193 is of a cup-like shape. The spring receiver 193 pushingly contacts both side projections of the pushing piece 192 at an inner peripheral lower end of the cup, and the spring receiver 193 allows the spring 195 to sit on an upper end outer peripheral flange of the cup. The valve holding member 194 includes an annular holding member 194A which continuously (or intermittently) pushingly contacts the entire circumference of the compression side disk valve 141A at a position of appropriate outer diameter of the upper surface, a slide portion 194B which is slid and guided by an upper end outer periphery of the piston bolt 125, and an oil passage 194C which brings the piston rod-side oil chamber 121A into communication with the compression side flow path 141, the expansion side flow path 142 and the bypass passage 145, and the valve holding member 194 allows the spring 195 to sit on the outer peripheral step portion.

If the second adjusting portion 190 moves the push rod 170 in the axial direction as described above, the pushing piece 192 against which the lower end surface of the push rod 170 is in contact vertically moves the spring receiver 193 to expand and shrink the valve holding member spring 195, and a set load of the spring 195 is adjusted. With this, the set load of the spring 195 biases the compression side disk valve 141A in its closing direction through the valve holding member 194 so that the compression side damping force by bending deformation of the compression side disk valve 141A can be adjusted. The valve holding member 194 can be replaced by one having different diameter of the holding member 194A, a valve holding member 194 having a holding member 194A of large diameter holds an outer peripheral side of the compression side disk valve 141A, the damping force is increases from a low speed region of piston speed. A valve holding member 194 having a holding member 194A of small diameter holds an inner peripheral side of the compression side disk valve 141A, and increased the damping force in intermediate and high speed regions of piston speed.

When the second adjusting portion 190 moves the pushing piece 192 through the push rod 170, the push rod 170 and the pushing piece 192 idle in the axial direction with respect to the needle valve 185, and the needle valve 185 is not influenced.

The front fork 110 has the damping force adjusting apparatus 140A and exhibits the following effects.
(a) It is possible to constitute the front fork 110 in which the first adjusting portion 180 and the second adjusting portion 190 are disposed on the upper portion of the front fork 110 and are coaxially disposed on the extension of the push rod 70, the first adjusting portion 180 and the push rod 170 are easily connected to each other in the axial direction, the structure is simple, the number of parts is reduced, and operation failure is less prone to be generated.
(b) Since the first adjusting portion 180 and the second adjusting portion 190 are coaxially disposed on the upper portion of the front fork 110, this can be applied to the front fork 110 which can be adjusted only from the upper end surface of the outer tube 111. Since the first adjusting portion 180 and the second adjusting portion 190 do not have directional properties in the circumferential direction of the outer tube 111, assembling positions into the vehicle body-side mounting members 114A and 114B in the circumferential direction are arbitrary, and the assembling performance is excellent.
(c) One hollow push rod 170 having the noncircular cross section is used, and the needle valve 185 is slidably inserted into the noncircular cross section of the push rod 170. Since the needle valve 185 is accommodated in the inner diameter of the push rod 170, an accommodation space of the needle valve 185 is not required around the outer periphery of the push rod 170, and the push rod 170 can excellently be applied to the front fork 110 having the thin piston rod 123.
(d) The first adjusting portion 180 is rotatably provided on the cap 113 of the upper portion of the front fork 110, the engaging piece 183 is engaged in the groove formed in the end surface of the first adjusting portion 180 in the rotation direction, and the outer periphery of the noncircular cross section of the push rod 170 can engage with the noncircular hole formed in the engaging piece 183 in the rotation direction, and can slide in the axial direction. The second adjusting portion 190 is threadedly engaged with the center hole of the first adjusting portion 180, and the end surface of the second adjusting portion 190 can contact the end surface of the push rod 170 penetrating the noncircular hole of the engaging piece 183 in the axial direction. Therefore, the first adjusting portion 180 and the second adjusting portion 190 can be compactly disposed coaxially on the upper portion of the front fork 10, the rotation force of the first adjusting portion 180 can easily be transmitted to the push rod 170, and the axial force of the second adjusting portion 190 can be transmitted to the push rod 170 directly.

The spring load adjusting apparatus 200 which vertically moves the lower spring receiver 132 and adjusts the spring load of the suspension spring 133 will be explained below.

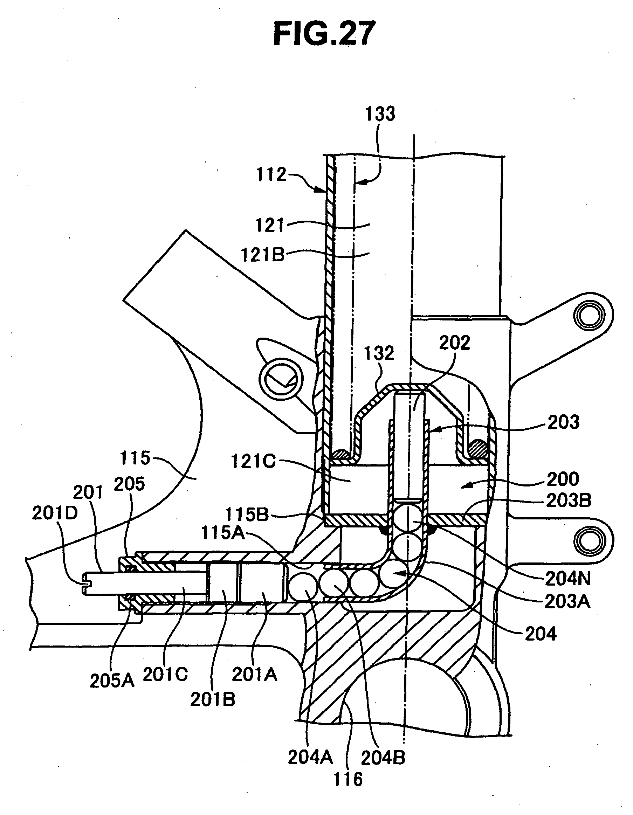

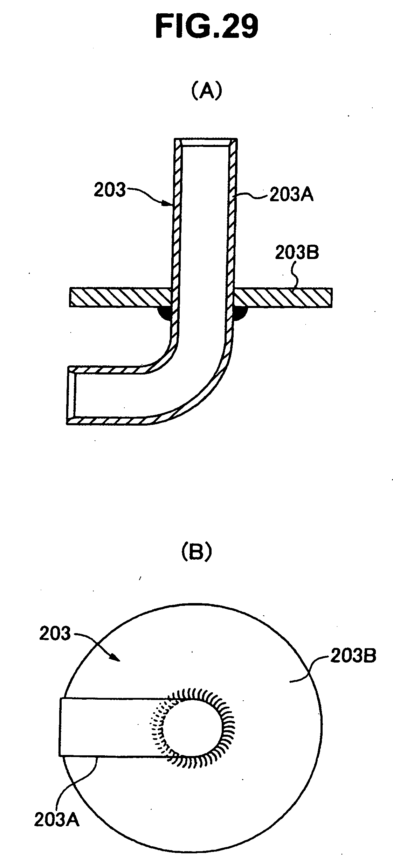

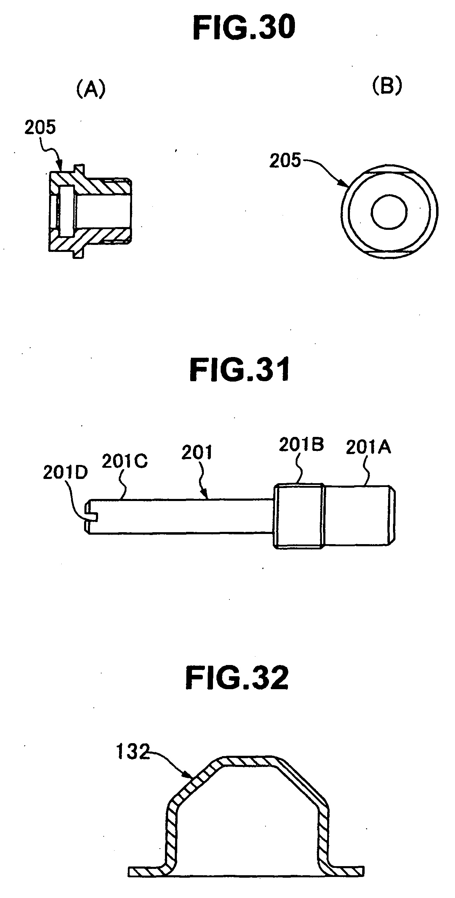

As shown in FIG. 27, the spring load adjusting apparatus 200 is provided at its bottom with the adjusting bolt 201 at a position facing outside (near the axle mounting hole 116) and deviated from the axle mounting hole 116 of the axle bracket 115 constituting the bottom of the inner tube 112, and with a plunger 202 which supports a lower surface of the lower spring receiver 132, a plurality of balls 204A, 204B ... 204N are continuously mounted on the tube 203A of the bent tube forming body 203 extending between the adjusting bolt 201 and the plunger 202, an end surface of the adjusting bolt 201 is abutted against the one end ball 204A of the continuous ball group 204, an end surface of the plunger 202 is abutted against the other end ball 204N of the ball group 204, the lower spring receiver 132 is vertically moved by threading motion of the adjusting bolt 201, and the spring load of the suspension spring 133 is adjusted. This will be explained concretely.
(1) A tip end piston portion 201A of the adjusting bolt 201 shown in FIG. 31 is slidably inserted into a mounting hole 115A which is disposed such as to intersect, at right angles (or diagonally intersect), with a center axis (the same as the center axis passing through the axle mounting hole 116 of the inner tube 112 in a state in which the axle bracket 115 is mounted on the inner tube 112) passing through the axle mounting hole 116 of the axle bracket 115 before it is threadedly engaged with the lower end opening of the inner tube 112, and an intermediate screw portion 201B of the adjusting bolt 201 is threadedly engaged with the mounting hole 115A. A plug 205 shown in FIG. 30 is threadedly engaged with the opening of the mounting hole 115A facing outside of the axle bracket 115, and an operation shaft 201C of the adjusting bolt 201 is liquid tightly guided by a center guide hole of the plug 205 through an O-ring 205A. The adjusting bolt 201 is threadedly moved using an operating groove 201D provided on an end surface of the operation shaft 201C, and the tip end piston portion 201A is moved forward and rearward in the axial direction of the mounting hole 115A.
(2) As shown in FIG. 29, in the bent tube forming body 203, one end straight tube portion and the other end straight tube portion of the tube 203A intersect with each other at right angles (or diagonally intersect), and an intermediate portion thereof is formed into an arc bent portion, and a mounting disk 203B is welded to a periphery of the other end straight tube portion. The one end straight tube portion of the tube 203A is inserted into the opening of the mounting hole 115A from inside of the axle bracket 115, the other end straight tube portion of the tube 203A is allowed to stand on a center axis (the same as the center axis passing through the axle mounting hole 116 of the inner tube 112 in a state in which the axle bracket 115 is mounted on the inner tube 112) passing through the axle mounting hole 116 of the axle bracket 115. At that time, the mounting disk 203B is fitted to a step portion 115B of an inner periphery of the axle bracket 115.
(3) The balls 204A, 204B ... 204N are provided in the tube 203A of the tube forming body 203 from the opening of the other end straight tube portion, and the plunger 202 is slidably inserted. The ball group 204 is provided in the mounting hole 115A and the tube 103A, sandwiched between the adjusting belt 201 and the plunger 202.
(4) The axle bracket 115 is threadedly engaged with the lower end opening of the inner tube 112. At that time, the mounting disk 203B of the tube forming body 203 is sandwiched between the lower end surface of the inner tube 112 and the step portion 115B of the axle bracket 115 under pressure.
(5) The lower spring receiver 132 is inserted into the inner periphery of the inner tube 112, and a center portion of the back surface of the lower spring receiver 132 pushingly contacts a contact surface on the tip end of the plunger 202. As shown in FIG. 32, the lower spring receiver 132 is of a hat-like shape, an inner surface of the hat pushingly contacts the contact surface of the plunger 202, and an outer peripheral flange portion of the hat is supported by the suspension spring 133. The lower spring receiver 132 brings the oil chamber 121 in the upper portion of the lower spring receiver 132 into communication with the back surface chamber 121C of the lower spring receiver 132 through an annular gap between the lower spring receiver 132 and the inner periphery of the inner tube 112. Then, the suspension spring 133 is inserted into the inner tube 112 and the suspension spring 133 is supported by the lower spring receiver 132.

If the adjusting bolt 201 is threadedly moved in a state in which the front fork 110 is assembled, the plunger 202 is vertically moved through the ball group 204, and the lower spring receiver 132 which is in contact with the plunger 102 vertically moves. The lower spring receiver 132 adjusts the initial length of the suspension spring 133 between the lower spring receiver 132 and the upper spring receiver 131 on the side of the piston rod 123, and adjusts the spring load of the suspension spring 133.

Since the front fork 110 has the spring load adjusting apparatus 200, the front fork 110 exhibits the following effects.
(a) The inner tube 112 is provided at its bottom with the adjusting bolt 201 which faces outside at a location deviated from the axle mounting hole 116 of the bottom of the inner tube 112, the plunger 202 which supports the lower surface of the lower spring receiver 132 is provided, the plurality of balls 204A, 204B ... 204N are continuously provided in the bent tube 203A extending between the adjusting bolt 201 and the plunger 202, the end surface of the adjusting bolt 201 is abutted against the one end ball 204A of the continuous ball group 204A, the end surface of the plunger 202 is abutted against the other end ball 204N of the ball group 204A, the lower spring receiver 32 is vertically moved by the threading motion of the adjusting bolt 201, and the spring load of the suspension spring 33 is adjusted. The operation force added to the adjusting bolt 201 is transmitted to the plunger 202 and the lower spring receiver 32 through the balls 204A, 204B ... 204N in the bent tube 203A, the adjusting bolt 201 is disposed far from the plunger 202, or the center axis of the adjusting bolt 201 and the center axis of the plunger 202 are intersect with each other largely (e.g., 90° or greater), the operation force added to the adjusting bolt 101 is transmitted to the plurality of balls 204A, 204B ... 204N in this order, or the direction operation force is gradually converted between the plurality of balls 204A, 204B ... 204N and as a result, this operation force can be transmitted to the plunger 202 and the lower spring receiver 32 smoothly.
(b) The load of the suspension spring 133 is supported directly by the plunger 202, the plurality of balls 204A, 204B ... 204N and the adjusting bolt 201 without using the pump piston and the pressurizing chamber for the working oil, a simple sealing structure for the working oil can be used, the machining operation and the assembling operation of parts can be simplified, and the reliability is also enhanced.
(c) Since the adjusting bolt 201 is provided on the bottom such as to face the outside at the position deviated from the axle mounting hole 116 of the inner tube 112, the spring load of the suspension spring 133 can be adjusted even in a state in which the front fork 10 is not detached from the axle.
(d) One end of the tube 203A is inserted into the mounting hole 115A of the adjusting bolt 201 provided on the bottom of the inner tube 112, the other end of the tube 203A is allowed to stand on the center of the inner tube 112, and the plunger 202 is slidably inserted into the other end of the tube 203A. Therefore, the adjusting bolt 201, the plurality of balls 204A, 204B ... 204N and the plunger 202 can compactly assembled on the bottom of the inner tube 112.
(e) Since the working oil chamber 121 of the upper portion of the lower spring receiver 132 is in communication with the back surface chamber 121C of the lower spring receiver 132 in the inner tube 112, only the spring load of the suspension spring 133 can be adjusted by the vertical motion of the lower spring receiver 132.
(f) Since the damping force adjusting apparatus 140A is provided in the upper portion of the outer tube 111 and the adjusting bolt 201 for adjusting the spring load is provided on the bottom of the inner tube 112, the assembling operation and the operability of the damping force adjusting apparatus 140A and the spring load adjusting apparatus 200 can be enhanced.

In the front fork 110, the O-ring is fitted into the outer peripheral groove of the lower spring receiver 132, the lower spring receiver 132 is liquid tightly fitted into the inner periphery of the inner tube 112 in the inner tube 112, the oil chamber 121 in the upper portion of the lower spring receiver 132 may be liquid tightly sealed against the back surface chamber 121C of the lower spring receiver 132. According to this, the vertical motion of the lower spring receiver 132 in the inner tube 112 also vertically moves the oil level in the oil reservoir chamber 122 through the working oil chamber 121 of the inner tube 112. Therefore, the spring load of the suspension spring 133 is adjusted by the vertical motion of the lower spring receiver 132, and since the increase in oil level in the oil reservoir chamber 122 expands and shrinks the air chamber 122B and as a result, the spring load of the air spring can also be adjusted.

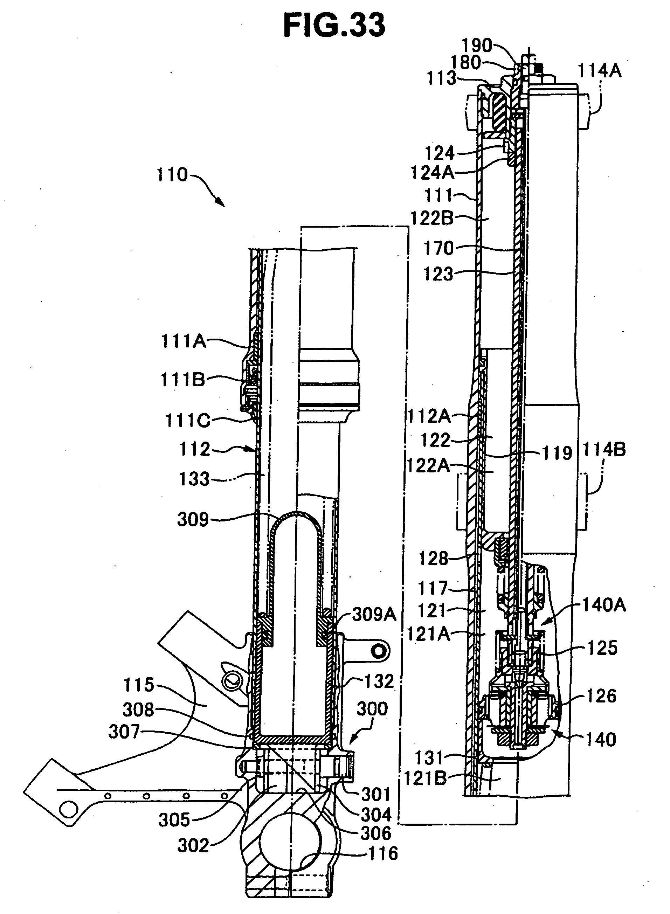

### (Second Embodiment) (FIGS. 33 to 40)

The second embodiment is substantially different from the first embodiment in that the spring load adjusting apparatus 200 is replaced by the spring load adjusting apparatus 300.

The spring load adjusting apparatus 300 which vertically moves the lower spring receiver 132 and adjusts the spring load of the suspension spring 133 will be explained below.

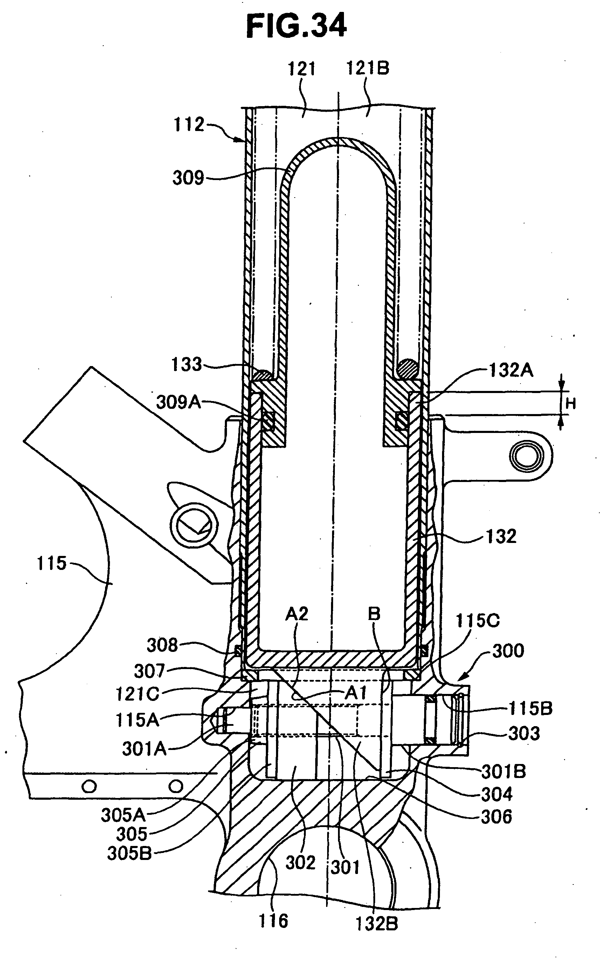

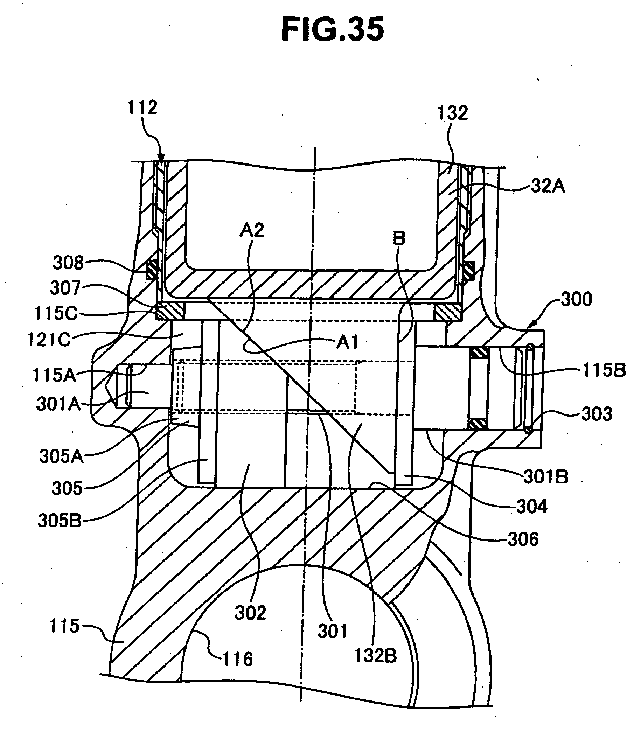

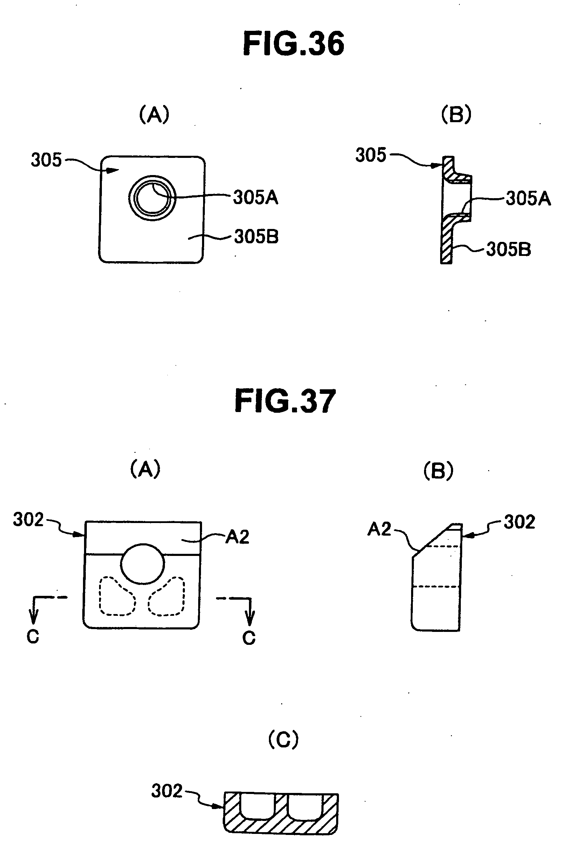

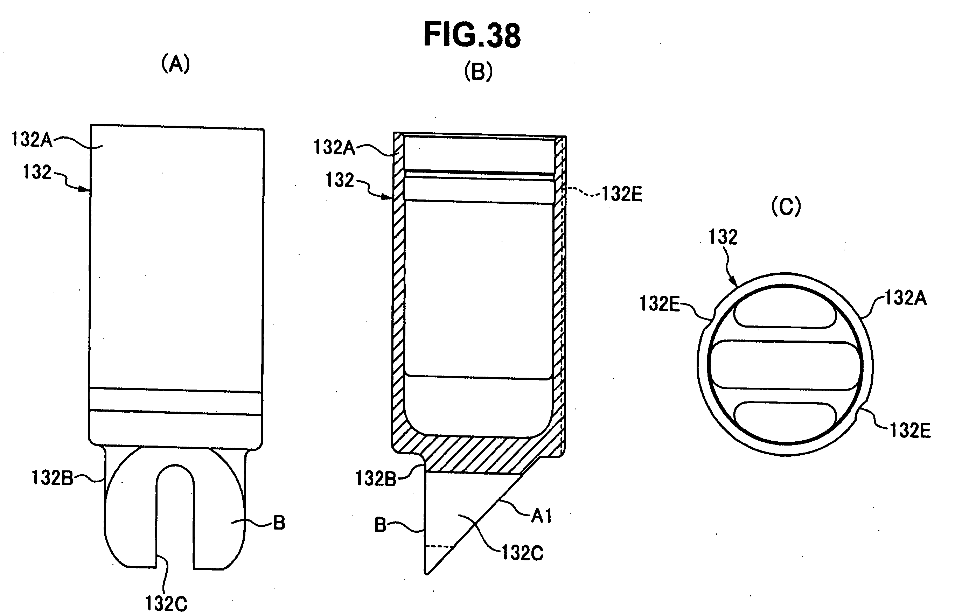

As shown in FIG. 35, in the spring load adjusting apparatus 300, an adjusting bolt 301 facing outside at a position (near the axle mounting hole 116) deviated from the axle mounting hole 116 of the axle bracket 115 constituting a bottom of the inner tube 112 is provided on the bottom. A slider 302 provided on a bottom inside of the axle bracket 115 (surface facing the lower end of the lower spring receiver 32) can straightly move in a direction intersecting the center axis of the inner tube 112 (axial direction of the adjusting bolt 301) by the rotation force of the adjusting bolt 301. A lower slant A1 of the lower spring receiver 132 is placed on an upper slant A2 of the slider 302, the lower spring receiver 132 is vertically moved by the rotation of the adjusting bolt 301, and the spring load of the suspension spring 133 is adjusted. This will be explained concretely.
(1) A tip end shaft portion 301A and a base end boss portion 301B of the adjusting bolt 301 are rotatably inserted into mounting holes 115A and 115B which intersect perpendicularly (or diagonally intersect) to a center axis (the same as the center axis passing through the axle mounting hole 116 of the inner tube 112 in a state in which the axle bracket 115 is mounted on the inner tube 112) passing through the axle mounting hole 116 of the axle bracket 115 before it is threadedly engaged with the lower end opening of the inner tube 112. The mounting hole 115A is a closed hole, the mounting hole 115B is a through hole, a retaining ring 303 is retained to the opening of the mounting hole 115B to which the base end boss portion 301B is rotatably attached together with an O-ring, and the adjusting bolt 301 is prevented from being pulled out.
(2) When the adjusting bolt 301 is rotatably attached to the axle bracket 115 as described in (1), a washer 304, a slider 302 and a nut 305 are inserted into the intermediate portion of the adjusting bolt 301. That is, the washer 304 is abutted against the step surface formed by the base end boss portion 301B on the side of the base end of the adjusting bolt 301. The washer 304 is of tetragon, and its lower side is abutted against the slide surface 306 of the bottom inside of the axle bracket 115 to prevent the rotation. The slider 302 is inserted into the tip end of the adjusting bolt 301, the nut 305 added and attached to the slider 302 is threadedly engaged with its screw portion. As shown in FIG. 36, the nut 305 includes a nut portion 305A, and has a quadrate plate 305B which is continuous with the nut portion 305A, a lower side of the plate 305B is abutted against the slide surface 306 of the axle bracket 115 to prevent rotation. As shown in FIG. 37, the slider 302 has a hole into which the adjusting bolt 301 is inserted, a lower side of the slider 302 is abutted against the slide surface 306 of the axle bracket 115 to prevent the rotation, and its upper side is an upper slant A2.
(3) The lower spring receiver 132 is inserted into the axle bracket 115. As shown in FIG. 38, in the lower spring receiver 132, a lower end projection 132B projects from a bottom of a bottomed cylindrical portion 132A, one end surface of the lower end projection 132B is the lower slant A1 and the other end surface thereof is a lower vertical surface B as viewed from side, the lower slant A1 and the lower vertical surface B intersect with each other at an acute angle. The lower spring receiver 132 includes a U-shaped rotation preventing groove 132C which extends on the central portion of the lower end projection 132B as viewed from front from the lower slant A1 to the lower vertical surface B, and which opens downward of the lower end projection 132B. As shown in FIG. 35, in the lower spring receiver 132 inserted into the axle bracket 115, the lower end projection 132B is sandwiched between the slider 302 and the washer 304, the lower slant A1 is placed on the upper slant A2 of the slider 302, and the lower vertical surface B is abutted against the end surface of the washer 304. At that time, the rotation preventing groove 132C of the lower spring receiver 132 sandwiches the intermediate portion of the adjusting bolt 301 so that the rotation preventing groove 132C is prevented from being rotated with respect to the center axis of the axle bracket 115.
   When the lower spring receiver 132 is inserted into the axle bracket 115, a washer 307 for supporting the tip end of the inner tube 112 is attached to a step portion 115C of the bottom inside of the axle bracket 115. The washer 307 is assembled around the lower end projection 132B of the lower spring receiver 132, and the washer 307 is retained to swelling portions 132D provided on both sides of the tip end of the lower end projection 132B so that the swelling portions 132D are prevented from falling.
(4) The axle bracket 115 is inserted into and threadedly engaged with the lower end of the inner tube 112 through an O-ring 308. The inner tube 112 is inserted into the annular gap between the inner periphery of the axle bracket 115 and a cylindrical portion 132A of the lower spring receiver 132 almost without no gap. At that time, the upper end surface of the cylindrical portion 132A of the lower spring receiver 132 projects from the upper end surface of the axle bracket 115 by H as shown in FIG. 34, the upper end of the cylindrical portion 132A is inserted into the inner periphery of the inner tube 112 and then, the lower end of the inner tube 112 is introduced into the annular gap between the cylindrical portion 132A and the inner periphery of the axle bracket 115, and the assembling performance of the inner tube 112 and the axle bracket 115 becomes excellent. At the time of the assembling operation, even if the axle bracket 115 is inverted vertically, the washer 307 stays and is not pulled out due to the existence of the O-ring 308 attached to the annular groove in the axle bracket 115.
(5) A cup-like spring collar 309 is liquid tightly fitted into the upper end opening of the cylindrical portion 132A of the lower spring receiver 132 through an O-ring 309A, and a flange of the spring collar 309 is placed on an upper end surface of the cylindrical portion 132A. The lower spring receiver 132 and the spring collar 309 maintain an internal space which is mutually integrally fused to each other in a cavity, an amount of oil to be charged into the oil chamber 21 of the inner tube 12 is reduced and the weight of the oil is reduced. Then, the suspension spring 133 is inserted into the inner tube 112, and the suspension spring 133 is supported by the lower spring receiver 132 through the flange of the spring collar 309.

If the adjusting bolt 301 is threadedly moved in a state in which the front fork 10 is assembled, the lower spring receiver 132 slides on the inner periphery of the inner tube 112 and moves vertically through the lower slant A1 of the lower spring receiver 132 and the upper slant A2 of the slider 302. The lower spring receiver 132 adjusts the initial length of the suspension spring 133 between the upper spring receiver 131 on the side of the piston rod 123 and the lower spring receiver 132, and adjusts the spring load of the suspension spring 133.

As shown in FIG. 38, in the spring load adjusting apparatus 300, a vertical groove 132E extending over the entire length of the cylindrical portion 132A is provided on the outer periphery of the cylindrical portion 132A of the lower spring receiver 132 which slides on the outer periphery of the inner tube 112 and with this, the oil chamber 121 in the upper portion of the lower spring receiver 132 is brought into communication with the back surface chamber 121C of the lower spring receiver 132, and as the lower spring receiver 132 moves vertically, oil in the oil chamber 121 can be supplied to and discharged from the back surface chamber 121C.

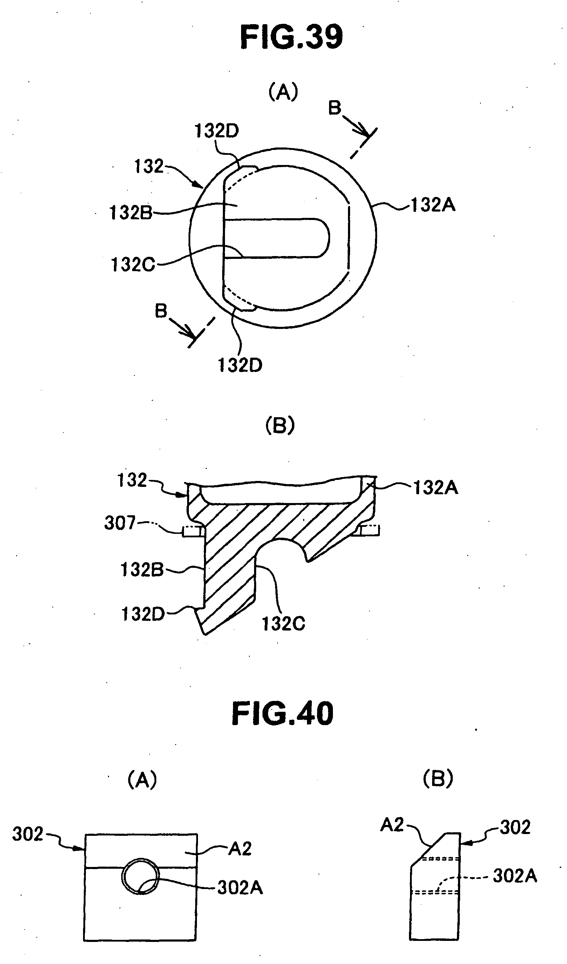

In the spring load adjusting apparatus 300, as shown in FIG. 40, the slider 302 may directly be provided with a screw portion 302A (nut portion), or the nut may be fitted and fixed to the slider 302 so that the nut 305 which is separated from the slider 302 is not required, and the number of parts can be reduced.

According to this embodiment, the following effects can be obtained.
(a) The horizontal movement of the slider 302 which straightly moves by the rotation force of the adjusting bolt 301 is converted into the vertical movement of the lower spring receiver 32 through the abutment between the lower slant A1 of the lower spring receiver 32 and the upper slant A2 of the slider 302.
(b) Since the adjusting bolt 301 is provided on the bottom such as to face the outside at the position deviated from the axle mounting hole 116 of the inner tube 112, the spring load of the suspension spring 133 can be adjusted even in the state in which the front fork 110 is not detached from the axle.
(c) A load of the suspension spring 133 is supported directly by the adjusting bolt 301 without using the pump piston and the pressurizing chamber for the working oil, the sealing structure of working oil can be simple, the machining operation and the assembling operation of parts can be simplified and its operation reliability is also enhanced.
(d) The lower slant A1 of the lower spring receiver 132 and the upper slant A2 of the slider 302 have the same gradients, they abut against each other over their entire surfaces, and sufficient spring load adjusting width and durability can be secured.
(e) Since the lower end projection 132B (the lower vertical surface B and the lower slant A1) of the lower spring receiver 132 is sandwiched between the end surface of the washer 304 provided on one side of the adjusting bolt 301 and the upper slant A2 of the slider 302 provided on the other end of the adjusting bolt 301, it is possible to easily constitute a mechanism which vertically moves the lower spring receiver 132 by the adjusting bolt 301 and the slider 302.
(f) The working oil chamber 121 in the upper portion of the lower spring receiver 132 is brought into the back surface chamber 121C of the lower spring receiver 132 in the inner tube 112. Therefore, only the spring load of the suspension spring 133 can be adjusted by the vertical motion of the lower spring receiver 132.

In the front fork 110, the O-ring is fitted to the outer peripheral groove of the lower spring receiver 132, the lower spring receiver 132 is liquid tightly fitted into the inner periphery of the inner tube 112 in the inner tube 112, and the oil chamber 121 in the upper portion of the lower spring receiver 132 may be sealed liquid tightly against the back surface chamber 121C of the lower spring receiver 132. According to this structure, the vertical motion of the lower spring receiver 132 in the inner tube 112 also vertically moves the oil level in the oil reservoir chamber 122 through the working oil chamber 121 of the inner tube 112. Therefore, the spring load of the suspension spring 133 is adjusted by the vertical motion of the lower spring receiver 132, and if the oil level in the oil reservoir chamber 122 increases, the air chamber 122B can be expanded and shrunk and as a result, the spring load of the air spring can also be adjusted.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

Although the invention has been illustrated and described with respect to several exemplary embodiments thereof, it should be understood by those skilled in the art that the foregoing and various other changes, omissions and additions may be made to the present invention without departing from the scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A hydraulic shock absorber in which an axle-side inner tube (112) is slidably inserted into a vehicle body-side outer tube (111),
the inner tube (112) is provided at its inner periphery with a partition wall member (119), a working oil chamber (121) is defined in a lower portion of the partition wall member (119), and an oil reservoir chamber (122) is defined in an upper portion of the partition wall member (119),
a piston support member (123) mounted on the side of the outer tube (111) is inserted into the working oil chamber (121) such as to penetrate the partition wall member (119), the piston support member (123) is provided at its tip end with a piston (126) which slides in the working oil chamber (121),
a suspension spring (133) is interposed between an upper spring receiver (131) on the side of the piston support member (123) and a lower spring receiver (132) on the side of a bottom of the inner tube (112) in the working oil chamber (121) of the inner tube (112),
**characterized in that**
the bottom of the inner tube (112) is provided with an adjusting bolt (201) facing outside at a position deviated from an axle mounting hole (116) of the bottom of the inner tube (112), a plunger (202) which supports a lower surface of the lower spring receiver (132) is provided, a plurality of balls (204A, 204B ... 204N) are continuously provided in a bent tube (203A) extended between the adjusting bolt (201) and the plunger (202), an end surface of the adjusting bolt (201) is abutted against one end ball (204A) of the continuous ball group (204), an end surface of the plunger (202) is abutted against the other end ball (204N) of the ball group (204), the lower spring receiver (132) is vertically moved by threading motion of the adjusting bolt (201), thereby adjusting a spring load of the suspension spring (133).

2. The hydraulic shock absorber according to claim 1, wherein one end of the bent tube (203A) is inserted into a mounting hole of the adjusting bolt (201) provided on the bottom of the inner tube (112), the other end of the bent tube (203A) is allowed to stand on a center portion of the inner tube (112), and the plunger (202) is slidably inserted into the other end of the bent tube (203A).

3. The hydraulic shock absorber according to claim 1 or 2, wherein the working oil chamber (121) in an upper portion of the lower spring receiver (132) is brought into communication with a back surface chamber (121C) of the lower spring receiver (132) in the inner tube (112).

4. The hydraulic shock absorber according to claim 1 or 2, wherein the working oil chamber (121) in an upper portion of the lower spring receiver (132) is sealed against a back surface chamber (121C) of the lower spring receiver (132) in the inner tube (112).

5. The hydraulic shock absorber according to any one of claims 1 to 4, wherein a hollow piston support member (123) mounted on the side of the outer tube (111) is inserted into the working oil chamber (121) such as to penetrate the partition wall member (119), a tip end of the piston support member (123) is provided with a piston (126) which slides in the working oil chamber (121),
the working oil chamber (121) of the inner tube (112) is defined into a piston support member side oil chamber (121A) and a piston side oil chamber (121B) by the piston (126), these two oil chambers (121A, 121B) can be in communication with each other through a compression side flow path (141) and an expansion side flow path provided in the piston (126), outlets of these two flow paths are respectively provided with a compression side damping valve (141A) and an expansion side damping valve (142A),
a bypass passage (145) which bring the piston support member side oil chamber (121A) and the piston side oil chamber (121 B) into communication with each other is provided in the hollow portion of the piston support member (123), and when the bypass passage (145) is provided with a needle valve (185) for adjusting the damping force,
a push rod (170) having a noncircular cross section which can move in a rotation direction and an axial direction is provided in the hollow portion of the piston support member (123),
a first adjusting portion (180) which moves the push rod (170) in the rotation direction and a second adjusting portion (190) which moves the push rod (170) in the axial direction are disposed in an upper portion of the outer tube (111) and coaxially on an extension of the push rod (170),
a needle valve (185) which is slidably inserted into the noncircular cross section of the push rod (170) is threadedly engaged with the hollow portion of the piston support member (123),
the compression side damping valve (141A) is biased in its closing direction by a spring (195) which pushingly contacts the push rod (170) in the axial direction.

6. A hydraulic shock absorber in which an axle-side inner tube (112) is slidably inserted into a vehicle body-side outer tube (111),
the inner tube (112) is provided at its inner periphery with a partition wall member (119), a working oil chamber (121) is defined in a lower portion of the partition wall member (119), and an oil reservoir chamber (122) is defined in an upper portion of the partition wall member (119),
a piston support member (123) mounted on the side of the outer tube (111) is inserted into the working oil chamber (121) such as to penetrate the partition wall member (119), the piston support member (123) is provided at its tip end with a piston (126) which slides in the working oil chamber (121),
a suspension spring (133) is interposed between an upper spring receiver (131) on the side of the piston support member (123) and a lower spring receiver (132) on the side of a bottom of the inner tube (112) in the working oil chamber (121) of the inner tube (112), **characterized in that**
an adjusting bolt (301) facing outside is provided on a bottom of the inner tube (112) at a location deviated from an axle mounting hole (116) of the bottom of the inner tube (112),
a slider (302) provided on the bottom of the inner tube (112) can straightly move in a direction intersecting with a center axis of the inner tube (112) by rotation force of the adjusting bolt (301),
a lower slant (A1) of the lower spring receiver (132) is placed on an upper slant (A2) of the slider (302), the lower spring receiver (132) is vertically moved by rotation of the adjusting bolt (301), thereby adjusting the spring load of a suspension spring (133).

7. The hydraulic shock absorber according to claim 6, wherein a washer (304) is abutted against a step surface of one end of the adjusting bolt (301), the slider (302) is inserted into the other end of the adjusting bolt (301), a nut portion (305A) added to the slider (302) is threadedly engaged with a screw portion of the adjusting bolt (301),
the lower slant (A1) of the lower spring receiver (132) is placed on the upper slant (A2) of the slider (302), and a lower vertical surface (B) of the lower spring receiver (132) is abutted against an end surface of the washer (304).

8. The hydraulic shock absorber according to claim 6 or 7, wherein the working oil chamber (121) in an upper portion of the lower spring receiver (132) is brought into communication with a back surface chamber (121C) of the lower spring receiver (132) in the inner tube (112).

9. The hydraulic shock absorber according to claim 6 or 7, wherein the working oil chamber (121) in an upper portion of the lower spring receiver (132) is sealed against a back surface chamber (121C) of the lower spring receiver (132) in the inner tube (112).

## Patentansprüche

1. Hydraulischer Stoßdämpfer, bei dem eine innere Röhre (112) der Achsenseite verschiebbar in eine äußere Röhre (111) der Fahrzeugkarosserie-Seite eingeführt ist,
wobei die innere Röhre (112) an ihrem Innenumfang mit einem Trennwandelement (119) versehen ist, eine Arbeitsölkammer (121) in einem unteren Abschnitt des Trennwandelementes (119) ausgebildet ist und eine Öl-Vorratskammer (122) in einem oberen Abschnitt des Trennwandelementes (119) ausgebildet ist,
ein Kolben-Trageelement (123), das an der Seite der äußeren Röhre (111) angebracht ist, so in die Arbeitsölkammer (121) eingeführt ist, dass es das Trennwandelement (119) durchdringt, und das Kolben-Trageelement (123) an seinem vorderen Ende mit einem Kolben (126) versehen ist, der in der Arbeitsölkammer (121) gleitet,
eine Aufhängungsfeder (133) zwischen einer oberen Federaufnahme (131) an der Seite des Kolben-Trageelementes (123) und einer unteren Federaufnahme (132) an der Seite eines unteren Endes der inneren Röhre (112) in der Arbeitsölkammer (121) der inneren Röhre (112) angeordnet ist,
**dadurch gekennzeichnet, dass**
das untere Ende der inneren Röhre (112) mit einer Einstellschraube (201) versehen ist, die an einer Position, die von einem Achsen-Anbringungsloch (116) des unteren Endes der inneren Röhre (112) abweicht, nach außen gewandt ist, ein Kolben (202), der eine untere Fläche der unteren Federaufnahme (132) trägt, vorhanden ist, eine Vielzahl von Kugeln (204A, 204B ... 204N) aufeinanderfolgend in einer gebogenen Röhre (203A) vorhanden sind, die sich zwischen der Einstellschraube (201) und dem Kolben (202) erstreckt, eine Endfläche der Einstellschraube (201) an einer Endkugel (204A) der Gruppe (204) aufeinanderfolgender Kugeln anliegt, eine Endfläche des Kolbens (202) an der anderen Endkugel (204 N) der Gruppe von Kugeln (204) anliegt, die untere Federaufnahme (132) durch eine Schraubbewegung der Einstellschraube (201) vertikal bewegt wird und so ein Federdruck der Aufhängungsfeder (133) eingestellt wird.

2. Hydraulischer Stoßdämpfer nach Anspruch 1, wobei ein Ende der gebogenen Röhre (203A) in ein Anbringungsloch der Einstellschraube (201) eingeführt ist, das am unteren Ende der inneren Röhre (112) vorhanden ist, das andere Ende der gebogenen Röhre (203A) auf einem Mittelabschnitt der inneren Röhre (112) stehen kann und der Kolben (202) verschiebbar in das andere Ende der gebogenen Röhre (203A) eingeführt werden kann.

3. Hydraulischer Stoßdämpfer nach Anspruch 1 oder 2, wobei die Arbeitsölkammer (121) in einem oberen Abschnitt der unteren Federaufnahme (132) mit einer Rückseitenkammer (121C) der unteren Federaufnahme (132) in der inneren Röhre (112) in Verbindung gebracht wird.

4. Hydraulischer Stoßdämpfer nach Anspruch 1 oder 2, wobei die Arbeitsölkammer (121) in einem oberen Abschnitt der unteren Federaufnahme (132) an einer Rückseitenkammer (121C) der unteren Federaufnahme (132) in der inneren Röhre (112) abgedichtet ist.

5. Hydraulischer Stoßdämpfer nach einem der Ansprüche 1 bis 4, wobei ein hohles Kolben-Trageelement (123), das an der Seite der äußeren Röhre (111) angebracht ist, in die Arbeitsölkammer (121) so eingeführt ist, dass es das Trennwandelement (119) durchdringt, und ein vorderes Ende des Kolben-Trageelementes (123) mit einem Kolben (126) versehen ist, der in der Arbeitsölkammer (121) gleitet,
die Arbeitsölkammer (121) der inneren Röhre (112) durch den Kolben (126) als eine Ölkammer (121A) der Seite des Kolben-Trageelementes und eine Ölkammer (212B) der Seite des Kolbens ausgebildet ist, diese zwei Ölkammern (121A, 121 B) über einen Kompressionsseiten-Strömungsweg (141) und einen Expansionsseiten-Strömungsweg, die in dem Kolben (126) vorhanden sind, in Verbindung miteinander stehen können, und Auslässe dieser zwei Strömungswege mit einem Kompressionsseiten-Dämpfventil (141A) bzw. einem Expansionsseiten-Dämpfventil (142A) versehen sind,
ein Umgehungskanal (145), der die Ölkammer (121A) der Seite des Kolben-Trageelementes und die Ölkammer (121 B) der Seite des Kolbens miteinander in Verbindung bringt, in dem hohlen Abschnitt des Kolben-Trageelementes (123) vorhanden ist, und, wenn der Umgehungskanal (145) mit einem Nadelventil (185) zum Einstellen der Dämpfkraft versehen ist, eine Schubstange (170) mit einem nicht-kreisförmigen Querschnitt, die sich in einer Drehrichtung und einer axialen Richtung bewegen kann, in dem hohlen Abschnitt des Kolben-Trageelementes (123) vorhanden ist,
ein erster Einstellabschnitt (180), der die Schubstange (170) in der Drehrichtung bewegt, und ein zweiter Einstellabschnitt (190), der die Schubstange (170) in der axialen Richtung bewegt, in einem oberen Abschnitt der äußeren Röhre (111) und koaxial an einer Verlängerung der Schubstange (170) angeordnet sind,
ein Nadelventil (185), das verschiebbar in den nicht-kreisförmigen Querschnitt der Schubstange (170) eingeführt ist, in Gewindeeingriff mit dem hohlen Abschnitt des Kolben-Trageelementes (123) ist,
das Kompressionsseiten-Dämpfventil (141A) durch eine Feder (195), die in der axialen Richtung schiebend mit der Schubstange (170) in Kontakt ist, in seine Schließrichtung gespannt wird.

6. Hydraulischer Stoßdämpfer, bei dem eine innere Röhre (112) der Achsenseite verschiebbar in eine äußere Röhre (111) der Fahrzeugkarosserieseite eingeführt ist,
wobei die innere Röhre (112) an ihrem Innenumfang mit einem Trennwandelement (119) versehen ist, eine Arbeitsölkammer (121) in einem unteren Abschnitt des Trennwandelementes (119) ausgebildet ist und eine Öl-Vorratskammer (122) in einem oberen Abschnitt des Trennwandelementes (119) ausgebildet ist,
ein Kolben-Trageelement (123), das an der Seite der äußeren Röhre (111) angebracht ist, in die Arbeitsölkammer (121) so eingeführt ist, dass es das Trennwandelement (119) durchdringt, und das Kolben-Trageelement (123) an seinem vorderen Ende mit einem Kolben (126) versehen ist, der in der Arbeitsölkammer (121) gleitet,
eine Aufhängungsfeder (133) zwischen einer oberen Federaufnahme (131) an der Seite des Kolben-Trageelementes (123) und einer unteren Federaufnahme (132) an der Seite eines unteren Endes der inneren Röhre (112) in der Arbeitsölkammer (121) der inneren Röhre (112) angeordnet ist, **dadurch gekennzeichnet, dass**
eine Einstellschraube (301), die nach außen gewandt ist, an einem unteren Ende der inneren Röhre (112) an einer Position vorhanden ist, die von einem Achsen-Anbringungsloch (116) des unteren Endes der inneren Röhre (112) abweicht,
sich ein Gleitteil (302), das am unteren Ende der inneren Röhre (112) vorhanden ist, durch Drehkraft der Einstellschraube (301) gerade in einer Richtung bewegen kann, die eine Mittelachse der inneren Röhre (112) schneidet,
eine untere geneigte Fläche (A1) der unteren Federaufnahme (132) auf einer oberen geneigten Fläche (A2) des Gleitteils (302) aufliegt und die untere Federaufnahme (302) durch Drehung der Einstellschraube (301) vertikal bewegt wird, um so die Federkraft einer Aufhängungsfeder (133) einzustellen.

7. Hydraulischer Stoßdämpfer nach Anspruch 6, wobei eine Scheibe (304) an einer Stufenfläche eines Endes der Einstellschraube (301) anliegt, das Gleitteil (302) in das andere Ende der Einstellschraube (301) eingeführt ist, ein Nutabschnitt (305A), der zu dem Gleitteil (302) hinzugefügt ist, in Gewindeeingriff mit einem Schraubabschnitt der Gewindeschraube (301) ist,
die untere geneigte Fläche (A1) der unteren Federaufnahme (132) auf der oberen geneigten Fläche (A2) des Gleitteils (302) aufliegt und eine untere vertikale Fläche (B) der unteren Federaufnahme (132) an einer Endfläche der Scheibe (304) anliegt.

8. Hydraulischer Stoßdämpfer nach Anspruch 6 oder 7, wobei die Arbeitsölkammer (121) in einem oberen Abschnitt der unteren Federaufnahme (132) in Verbindung mit einer Rückseitenkammer (121C) der unteren Federaufnahme (132) in der inneren Röhre (112) gebracht wird.

9. Hydraulischer Stoßdämpfer nach Anspruch 6 oder 7, wobei die Arbeitsölkammer (121) in einem oberen Abschnitt der unteren Federaufnahme (132) an einer Rückseitenkammer (121C) der unteren Federaufnahme (132) in der inneren Röhre (112) abgedichtet ist.

## Revendications

1. Amortisseur hydraulique, dans lequel un tube interne (112) du côté de l'essieu est inséré de manière coulissante dans un tube externe (111) du côté de la carrosserie du véhicule,
le tube interne (112) est prévu au niveau de sa périphérie interne avec un élément de paroi de séparation (119), une chambre d'huile de commande (121) est définie dans une partie inférieure de l'élément de paroi de séparation (119), et une chambre de réservoir d'huile (122) est définie dans une partie supérieure de l'élément de paroi de séparation (119),
un élément de support de piston (123) monté sur le côté du tube externe (111) est inséré dans la chambre d'huile de commande (121) afin de pénétrer dans l'élément de paroi de séparation (119), l'élément de support de piston (123) est prévu au niveau de son extrémité de pointe, avec un piston (126) qui coulisse dans la chambre d'huile de commande (121),
un ressort de suspension (133) est intercalé entre un dispositif de réception de ressort supérieur (131) sur le côté de l'élément de support de piston (123) et un dispositif de réception de ressort inférieur (132) sur le côté d'un fond du tube interne (112) dans la chambre d'huile de commande (121) du tube interne (112),
**caractérisé en ce que :**
le fond du tube interne (112) est doté d'un boulon d'ajustement (201) orienté vers l'extérieur à une position déviée d'un trou de montage d'essieu (116) du fond du tube interne (112), un piston plongeur (202) qui supporte une surface inférieure du dispositif de réception de ressort inférieur (132) est prévu, une pluralité de billes (204A, 204B, ...204N) est prévue de manière continue dans un tube fléchi (203A) étendu entre le boulon d'ajustement (201) et le piston plongeur (202), une surface d'extrémité du boulon d'ajustement (201) vient en butée contre une bille d'extrémité (204A) du groupe de billes continu (204), une surface d'extrémité du piston plongeur (202) vient en butée contre l'autre bille d'extrémité (204N) du groupe de billes (204), le dispositif de réception de ressort inférieur (132) est verticalement déplacé par le mouvement de filetage du boulon d'ajustement (201), ajustant ainsi une charge de rappel du ressort de suspension (133).

2. Amortisseur hydraulique selon la revendication 1, dans lequel une extrémité du tube fléchi (203A) est insérée dans un trou de montage du boulon d'ajustement (201) prévu sur le fond du tube interne (112), l'autre extrémité du tube fléchi (203A) est autorisée à se tenir sur une partie centrale du tube interne (112), et le piston plongeur (202) est inséré de manière coulissante dans l'autre extrémité du tube fléchi (203A).

3. Amortisseur hydraulique selon la revendication 1 ou 2, dans lequel la chambre d'huile de commande (121) dans une partie supérieure du dispositif de réception de ressort inférieur (132) est amenée en communication avec une chambre de surface arrière (121C) du dispositif de réception de ressort inférieur (132) dans le tube interne (112).

4. Amortisseur hydraulique selon la revendication 1 ou 2, dans lequel la chambre d'huile de commande (121) dans une partie supérieure du dispositif de réception de ressort inférieur (132) est étanche par rapport à une chambre de surface arrière (121C) du dispositif de réception de ressort inférieur (132) dans le tube interne (112).

5. Amortisseur hydraulique selon l'une quelconque des revendications 1 à 4, dans lequel un élément de support de piston creux (123) monté sur le côté du tube externe (111) est inséré dans la chambre d'huile de commande (121) afin de pénétrer dans l'élément de paroi de séparation (119), une extrémité de pointe de l'élément de support de piston (123) est prévue avec un piston (126) qui coulisse dans la chambre d'huile de commande (121),
la chambre d'huile de commande (121) du tube interne (112) est définie dans une chambre d'huile (121A) du côté de l'élément du support de piston et une chambre d'huile (121B) du côté du piston par le piston (126), ces deux chambres d'huile (121A, 121B) peuvent être en communication entre elles par un passage d'écoulement (141) du côté de la compression et un passage d'écoulement du côté de l'expansion prévu dans le piston (126), les sorties de ces deux passages d'écoulement sont respectivement prévues avec une soupape d'amortissement (141A) du côté de la compression et une soupape d'amortissement (142A) du côté de l'expansion,
un passage de dérivation (145) qui amène la chambre d'huile (121A) du côté de l'élément de support de piston et la chambre d'huile (121B) du côté de piston en communication entre elles, est prévu dans la partie creuse de l'élément de support de piston (123), et lorsque le passage de dérivation (145) est prévu avec une soupape à pointeau (185) pour ajuster la force d'amortissement,
une tige de poussée (170) ayant une section transversale non circulaire qui peut se déplacer dans une direction de rotation et une direction axiale est prévue dans la partie creuse de l'élément de support de piston (123),
une première partie d'ajustement (180) qui déplace la tige de poussée (170) dans le sens de rotation et une seconde partie d'ajustement (190) qui déplace la tige de poussée (170) dans la direction axiale, sont disposées dans une partie supérieure du tube externe (111) et de manière coaxiale sur une extension de la tige de poussée (170),
une soupape à pointeau (185) qui est insérée de manière coulissante dans la section transversale non circulaire de la tige de poussée (170) est mise en prise par filetage avec la partie creuse de l'élément de support de piston (123),
la soupape d'amortissement (141A) du côté de la compression est sollicitée dans sa direction de fermeture par un ressort (195) qui est en contact de poussée avec la tige de poussée (170) dans la direction axiale.

6. Amortisseur hydraulique dans lequel un tube interne (112) du côté de l'essieu est inséré de manière coulissante dans un tube externe (111) du côté de la carrosserie du véhicule,
le tube interne (112) est prévu au niveau de sa périphérie interne avec un élément de paroi de séparation (119), une chambre d'huile de commande (121) est définie dans une partie inférieure de l'élément de paroi de séparation (119), et une chambre de réservoir d'huile (122) est définie dans une partie supérieure de l'élément de paroi de séparation (119),
un élément de support de piston (123) monté sur le côté du tube externe (111) est inséré dans la chambre d'huile de commande (121) afin de pénétrer dans l'élément de paroi de séparation (119), l'élément de support de piston (123) est prévu au niveau de son extrémité de pointe avec un piston (126) qui coulisse dans la chambre d'huile de commande (121),
un ressort de suspension (133) est intercalé entre un dispositif de réception de ressort supérieur (131) du côté de l'élément du support de piston (123) et un dispositif de réception de ressort inférieur (132) du côté d'un fond du tube interne (112) dans la chambre d'huile de commande (121) du tube interne (112),
**caractérisé en ce que :**
un boulon d'ajustement (301) orienté vers l'extérieur, est prévu sur un fond du tube interne (112) à un emplacement dévié d'un trou de montage d'essieu (116) du fond du tube interne (112),
une glissière (302) prévue sur le fond du tube interne (112) peut se déplacer en ligne droite dans une direction coupant un axe central du tube interne (112) par la force de rotation du boulon d'ajustement (301),
une inclinaison inférieure (A1) du dispositif de réception de ressort inférieur (132) est placée sur une inclinaison supérieure (A2) de la glissière (302), le dispositif de réception de ressort inférieur (132) est déplacé verticalement par la rotation du boulon d'ajustement (301) ajustant ainsi la charge de ressort d'un ressort de suspension (133).

7. Amortisseur hydraulique selon la revendication 6, dans lequel une rondelle (304) vient en butée contre une surface étagée d'une extrémité du boulon d'ajustement (301), la glissière (302) est insérée dans l'autre extrémité du boulon d'ajustement (301), une partie d'écrou (305A) ajoutée à la glissière (302) est mise en prise par filetage avec une partie de vis du boulon d'ajustement (301),
l'inclinaison inférieure (A1) du dispositif de réception de ressort inférieur (132) est placée sur l'inclinaison supérieure (A2) de la glissière (302), et une surface verticale inférieure (B) du dispositif de réception de ressort inférieur (132) vient en butée contre une surface d'extrémité de la rondelle (304).

8. Amortisseur hydraulique selon la revendication 6 ou 7, dans lequel la chambre d'huile de commande (121) dans une partie supérieure du dispositif de réception de ressort inférieur (132) est amenée en communication avec une chambre de surface arrière (121C) du dispositif de réception de ressort inférieur (132) dans le tube interne (112).

9. Amortisseur hydraulique selon la revendication 6 ou 7, dans lequel la chambre d'huile de commande (121) dans une partie supérieure du dispositif de réception de ressort inférieur (132) est étanche par rapport à une chambre de surface arrière (121C) du dispositif de réception de ressort inférieur (132) dans le tube interne (112).
